# EUROPEAN PATENT APPLICATION

(11) **EP 4 444 030 A1**
(43) Date of publication of application: **09.10.2024**
(21) Application number: 24167115.5
(22) Date of filing: 28.03.2024
(51) Int. Cl.: H04W 76/28, H04W 52/02, H04W 24/02, H04W 88/08, H04W 92/20

(54) **CELL DTX AND CELL DRX NEGOTIATION**

(30) Priority: 06.04.2023 IN 202341026123
(71) Applicant: Nokia Technologies Oy, 02610 Espoo (FI)
(72) Inventor: PANTELIDOU, Anna, Antony (FR); HELMERS, Hakon, Sceaux (FR); LASELVA, Daniela, Klarup (DK); BALASUBRAMANIAM, Sankaran, Bangalore (IN); HMEDOUSH, Iman, Massy (FR); KHLASS, Ahlem, Massy (FR)
(74) Representative: Nokia EPO representatives

(57) **Abstract**

A method comprising, receiving at a first access network element or function serving at least one first radio cell and neighboured to a second access network element or function serving at least one second radio cell adjacent to the at least one first radio cell, information about at least one second cell discontinuous transmission, DTX, and/or discontinuous reception, DRX, pattern used by the second access network element or function at least over the at least one second radio cell; based on the received information, determining a conflict with at least one first cell DTX and/or DRX pattern used by the first access network element or function at least over the at least one first radio cell; providing coordination parameters comprising at least one of a pattern density parameter indicating a density of active time in a cell DTX and/or DRX pattern, a preference parameter indicating a preference with respect to a usage of at least one cell DTX and/or DRX pattern, or a characteristics parameter indicating a power and/or antenna characteristics for at least one cell DTX and/or DRX pattern; and receiving updated information in relation to an update of the at least one second cell DTX and/or DRX pattern.

## Description

### Technical Field

The present disclosure relates to a method and an apparatus for cell Discontinuous Transmission (DTX) and cell Discontinuous Reception (DRX) negotiation.

### Background Art

The following description of background art may include insights, discoveries, understandings or disclosures, or associations, together with disclosures not known to the relevant prior art, to at least some examples of embodiments of the present disclosure but provided by the disclosure. Some of such contributions of the disclosure may be specifically pointed out below, whereas other of such contributions of the disclosure will be apparent from the related context.

In the last years, an increasing extension of communication networks, e.g. of wire based communication networks, such as the Integrated Services Digital Network (ISDN), Digital Subscriber Line (DSL), or wireless communication networks, such as the cdma2000 (code division multiple access) system, cellular 3^{rd} generation (3G) like the Universal Mobile Telecommunications System (UMTS), fourth generation (4G) communication networks or enhanced communication networks based e.g. on Long Term Evolution (LTE) or Long Term Evolution-Advanced (LTE-A), fifth generation (5G) communication networks, cellular 2^{nd} generation (2G) communication networks like the Global System for Mobile communications (GSM), the General Packet Radio System (GPRS), the Enhanced Data Rates for Global Evolution (EDGE), or other wireless communication system, such as the Wireless Local Area Network (WLAN), Bluetooth or Worldwide Interoperability for Microwave Access (WiMAX), took place all over the world. Various organizations, such as the European Telecommunications Standards Institute (ETSI), the 3^{rd} Generation Partnership Project (3GPP), Telecoms & Internet converged Services & Protocols for Advanced Networks (TISPAN), the International Telecommunication Union (ITU), 3^{rd} Generation Partnership Project 2 (3GPP2), Internet Engineering Task Force (IETF), the IEEE (Institute of Electrical and Electronics Engineers), the WiMAX Forum and the like are working on standards or specifications for telecommunication network and access environments.

Cell DTX/DRX is a new mechanism that allows a New Generation Radio Access Network (NG-RAN) node to omit the transmission or reception of data traffic and/or all or a part of control channels or reference signals during cell DTX or cell DRX non-active times. The NG-RAN node then becomes able to enter an energy saving state and save energy during these non-active times.

In this context, however, problems may arise in case a NG-RAN node activates patterns of cell DTX or DRX over its respective cells, which may e.g. comprise cells adjacent to cells of neighbouring NG-RAN nodes. It is therefore an object of the present disclosure to improve the prior art.

The following meanings for the abbreviations used in this specification apply
- 2G: Second Generation
- 3G: Third Generation
- 3GPP: 3^{rd} Generation Partnership Project
- 3GGP2: 3^{rd} Generation Partnership Project 2
- 4G: Fourth Generation
- 5G: Fifth Generation
- 6G: Sixth Generation
- AP: Access Point
- BS: Base Station
- CDMA: Code Division Multiple Access
- CU: Centralized Unit
- DL: Downlink
- DRX: Discontinuous Reception
- DSL: Digital Subscriber Line
- DTX: Discontinuous Transmission
- DU: Distributed Unit
- EDGE: Enhanced Data Rates for Global Evolution
- EEPROM: Electrically Erasable Programmable Read-only Memory
- eNB: Evolved Node B
- ETSI: European Telecommunications Standards Institute
- gNB: Next Generation Node B
- GPRS: General Packet Radio System
- GSM: Global System for Mobile communications
- IEEE: Institute of Electrical and Electronics Engineers
- ISDN: Integrated Services Digital Network
- ITU: International Telecommunication Union
- LTE: Long Term Evolution
- LTE-A: Long Term Evolution-Advanced
- MANETs: Mobile Ad-Hoc Networks
- NB: Node B
- NG: New Generation
- PDSCH: Physical Downlink Shared Channel
- QoS: Quality of Service
- RAN: Radio Access Network
- TISPAN: Telecoms & Internet converged Services & Protocols for Advanced Networks
- UE: User Equipment
- UMTS: Universal Mobile Telecommunications System
- UP: Uplink
- UWB: Ultra-Wideband
- WCDMA: Wideband Code Division Multiple Access
- WiMAX: Worldwide Interoperability for Microwave Access
- WLAN: Wireless Local Area Network

### SUMMARY

It is an objective of various examples of embodiments of the present disclosure to improve the prior art. Hence, at least some examples of embodiments of the present disclosure aim at addressing at least part of the prior art issues and/or problems and drawbacks.

Various aspects of examples of embodiments of the present disclosure are set out in the appended claims and relate to methods, apparatuses and computer program products relating to cell DTX and cell DRX negotiation.

The objective is achieved by the methods, apparatuses and non-transitory storage media as specified in the appended claims. Advantageous further developments are set out in respective dependent claims.

Any one of the aspects mentioned according to the appended claims enables a for cell DTX and cell DRX negotiation, thereby allowing to solve at least part of the prior art problems and drawbacks as identified/derived.

Thus, improvement is achieved by methods, apparatuses and computer program products enabling for cell DTX and cell DRX negotiation.

In more detail, the present specification is advantageous over the prior art, since it e.g. enables to coordinate between NG-RAN nodes when the cell DTX and/or cell DRX is enabled, in order to reduce and/or minimize, ideally to avoid/resolve the inter-cell interference. It further enables to e.g. reduce and/or minimize, ideally avoid and resolve eventual intra or inter-nodes conflicts from cell DTX/DRX patterns allocation through signaling over Xn and/or F1 interfaces.

Further advantages may become apparent from the following detailed description.

### BRIEF DESCRIPTION OF THE DRAWINGS

Some embodiments of the present disclosure are described below, by way of example only, with reference to the accompanying drawings, in which:
Figure 1 shows a cell DTX pattern and its parameters;
Figure 2 shows a cell DTX/DRX cycle example;
Figure 3 shows three different possible DTX patterns available at a NG-RAN node according to various examples of embodiments;
Figure 4 shows an exchange of information related to used cell DTX/DRX patterns between NG-RAN nodes according to various examples of embodiments;
Figure 5 shows an example of cell DTX/DRX negotiation procedure over Xn when cell DTX or cell DRX conflict is determined by a node according to various examples of embodiments;
Figure 6 shows, in the absence of conflicts, NG-RAN nodes A and B to exchange cell DTX or cell DRX patterns with each other according to various examples of embodiments;
Figure 7 shows an exchange of information related to used cell DTX/DRX pattern between gNB-DUs within same gNB according to various examples of embodiments;
Figure 8 shows an example of cell DTX/DRX negotiation procedure over F1 when conflict is determined by a gNB-DU according to various examples of embodiments;
Figure 9 shows a split architecture example for DTX/DRX pattern negotiation over F1 for conflict reduction and/or minimization in inter-gNB scenario according to various examples of embodiments;
Figure 10 (parts 1 of 2 and 2 of 2) shows an example of conflict determination in inter-gNB split architecture scenario according to various examples of embodiments;
Figure 11 shows a flowchart illustrating steps corresponding to a method according to various examples of embodiments;
Figure 12 shows a flowchart illustrating steps corresponding to a method according to various examples of embodiments;
Figure 13 shows a flowchart illustrating steps corresponding to a method according to various examples of embodiments;
Figure 14 shows a flowchart illustrating steps corresponding to a method according to various examples of embodiments;
Figure 15 shows a block diagram illustrating an apparatus according to various examples of embodiments;
Figure 16 shows a block diagram illustrating an apparatus according to various examples of embodiments;
Figure 17 shows a block diagram illustrating an apparatus according to various examples of embodiments; and
Figure 18 shows a block diagram illustrating an apparatus according to various examples of embodiments.

### DESCRIPTION OF EMBODIMENTS

Basically, for properly establishing and handling a communication between two or more end points (e.g. communication stations or elements or functions, such as terminal devices, user equipments (UEs), or other communication network elements, a database, a server, host etc.), one or more network elements or functions (e.g. virtualized network functions), such as communication network control elements or functions, for example access network elements like access points (APs), radio base stations (BSs), relay stations, eNBs, gNBs etc., and core network elements or functions, for example control nodes, support nodes, service nodes, gateways, user plane functions, access and mobility functions etc., may be involved, which may belong to one communication network system or different communication network systems.

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is obvious for a person skilled in the art that the embodiments may also be applied to other kinds of communication networks like 4G and/or LTE (and even 6G) where mobile communication principles are integrated, e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc.. Furthermore, without loss of generality, the description of some examples of embodiments is related to a mobile communication network, but principles of the disclosure can be extended and applied to any other type of communication network, such as a wired communication network or datacenter networking.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules etc. that have not been specifically mentioned.

A basic system architecture of a (telecommunication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed or a centralized unit (CU), which controls a respective coverage area or cell(s) and with which one or more communication stations such as communication elements or functions, like user devices (e.g. customer devices), mobile devices, or terminal devices, like a UE, or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, (core) network elements or network functions ((core) network control elements or network functions, (core) network management elements or network functions), such as gateway network elements/functions, mobility management entities, a mobile switching center, servers, databases and the like may be included.

The general functions and interconnections of the described elements and functions, which also depend on the actual network type, are known to those skilled in the art and described in corresponding specifications, so that a detailed description thereof is omitted herein. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a mobile device, a terminal device, control elements or functions, such as access network elements, like a base station (BS), an eNB/gNB, a radio network controller, a core network control element or function, such as a gateway element, or other network elements or functions, as described herein, (core) network management element or function and any other elements, functions or applications may be implemented by software, e.g. by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors.

It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

With regard to the above-mentioned cell DTX/DRX mechanism, in order to support DTX/DRX mechanism in the RAN inter-node network signalling needs to be introduced so that a NG-RAN node informs its neighbour NG-RAN nodes, with which it has adjacent cells, about usage of cell DTX/DRX, when this is supported by the node, as discussed in TR 38.864 clause 6.1.4.5 and also in R3-225670 (Huawei). During cell DTX/DRX-based energy saving operation, a cell may support one or more DTX patterns and one or more DRX patterns.

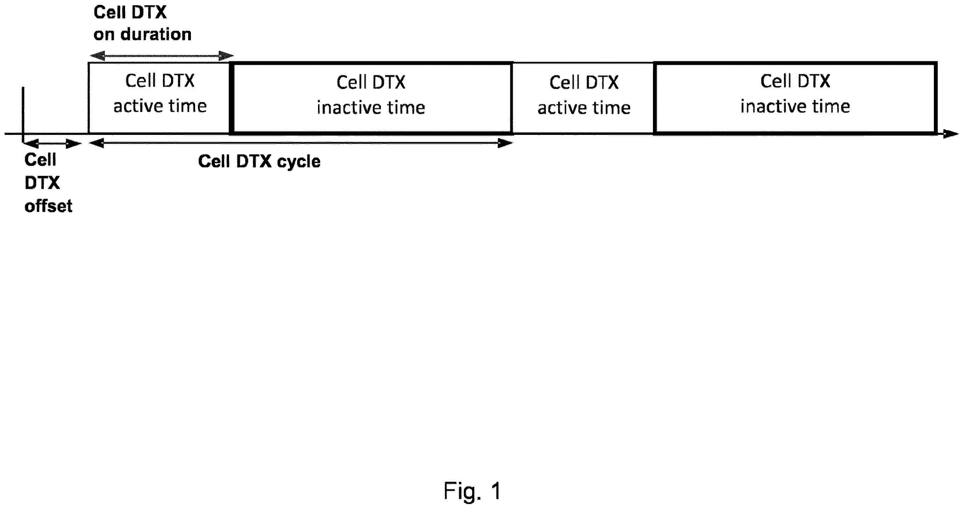

A cell DTX pattern is defined by three parameters, as outlined with reference to Figure 1:
1. The cell DTX cycle: this defines the periodicity with which DTX periods repeat.
2. The cell DTX on-duration period: the duration of the active time within one DTX cycle.
3. The cell DTX offset: the point in time (e.g. subframe number or slot number), where a given DTX pattern starts (e.g. relative to an absolute time).

Controlled by the parameters above, within a cell DTX cycle, two main periods can be observed as provided in Figure 1:
- The cell DTX active time: this is the time during which cell transmissions may be performed.
- The cell DTX non-active (or inactive) time: during this period, certain restrictions may be applied on the cell transmission of DL data traffic and/or all or a part of DL control channels or DL reference signals.

Similarly, the cell DRX pattern can be described equivalently by three parameters, and a cell DRX pattern is similarly composed of two main periods:
- DRX active time: cell reception may be performed.
- DRX non-active time: DRX specific restrictions apply on the NG-RAN node's reception of UL data traffic and/or all or a part of UL control channels or UL reference signals.

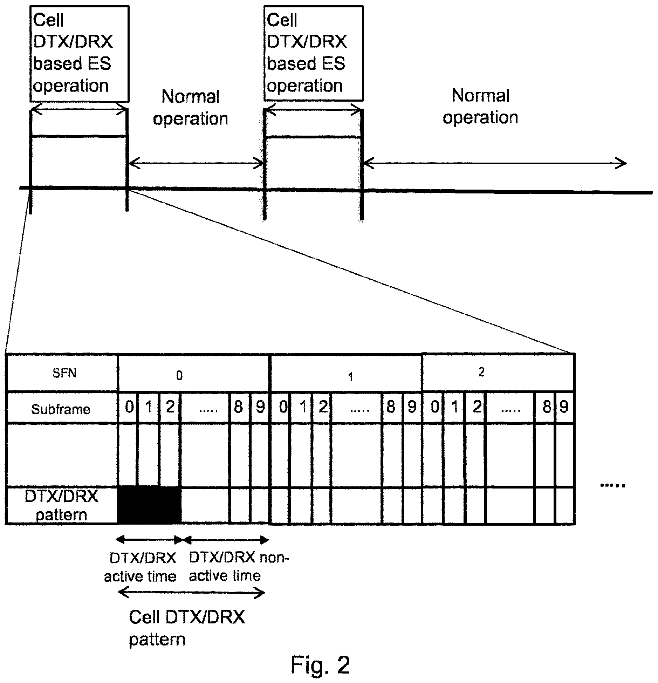

An example of pattern activation and pattern definition (DTX and/or DRX) is illustrated in Figure 2. It shall be noted that the DTX and DRX configurations may be different in a cell in terms of the active and non-active times. In the figure, a cell DTX or cell DRX pattern example is shown with respect to a subframe granularity. In case of 15 kHz sub-carrier spacing for NR, a subframe corresponds to 1 slot, which is 1 ms. As another possible example, the relationship of cell DTX or cell DRX pattern can be provided with respect to a slot granularity, for any numerology.

An NG-RAN node may activate different patterns of cell DTX or DRX over its cells depending on the cell load and Quality of Service (QoS) targets. It can be expected that usage of cell DTX or DRX operation may result in gains with respect to energy consumption when a gNB is in low load so it can afford to omit some of its transmissions/receptions. An NG-RAN node may use different possible patterns at different time instants. The pattern to be used at each time will need to match the traffic/load at the NG-RAN node, and specifically in the given cell. If multiple patterns can accommodate the same traffic then for energy saving purposes the node will try to use the pattern that allows more sleeping time opportunities (namely it has the highest possible proportion (density) of non-active time).

In the context of cell DTX or DRX, the following improvements can be defined in three distinct, but inter-dependent domains:
- Time Domain - Specify cell DRX/DTX mechanisms through which a cell could have predefined active/inactive periods of time, where data (and a part of) signaling resources shall be enabled/disabled.
- Spatial Domain - Specify improvements in the different spatial elements like antenna ports, beams etc., which could be intelligently disabled/enabled to improve energy savings.
- Power Domain - Enhancements in power control to improve network energy savings.

These procedures are expected to work not in standalone manner, but jointly. Specifically, as an example here it is assumed that the dynamic adaptation of TRXs/antennas and Physical Downlink Shared Channel (PDSCH) power will be used (and so will be configured) in conjunction with cell DTX such that a certain number of TRX and/or PDSCH power configuration can be associated with a given cell DTX pattern.

For such joint use of these techniques, co-ordination is necessary. This co-ordination could be of the following nature:
- Co-ordination between the Cell DRX/DTX, Spatial and Power domain configurations.
- Co-ordination between intra-gNB and inter-gNB neighboring cells of the joint use of Cell DRX/DTX, Spatial and Power configuration(s).

Lack of such co-ordination may lead to issues like interference and degradation in the network service performance. However, there is no mechanism today defined in 3GPP through which the network could perform the co-ordination that has been listed above.

In this scenario and when the number of conflicting neighboring adjacent cells increases, it may be preferable to spread the downlink (DL) transmissions over additional DTX active times while e.g. transmitting at lower powers which will in effect reduce the experienced inter-cell DL interference. As one extreme, the combination of high DL load and many adjacent cells therefore may lead to the need for continuous transmission so that all available slots are used even though the DTX feature is enabled. Such situation may comprise a trigger to the node to switch-off its cell DTX feature.

Similarly, conflicts may occur in the uplink (UL) during cell DRX active time, where UL transmissions of served user equipments (UEs) will be concentrated in time depending on the proportion of cell DRX active time vs. cell DRX non-active time. Therefore, it may be preferable to spread the UL transmissions of served UEs (by means of provisioning of UL scheduling grants) over additional DRX active time while e.g. using lower power which will in effect reduce the experienced inter-cell UL interference. As one extreme, the combination of high UL load and many adjacent cells therefore may lead to the need for continuous reception so that all the available slots are used even though the DRX feature is enabled. Such situation may comprise also a trigger to the node to switch-off its cell DRX feature.

In the two extremes, even though DTX or DRX feature may be enabled, the load in the downlink or uplink direction is such that it prevents energy saving benefits through this feature.

Since Radio Access Network (RAN) is a distributed architecture, there is no optimal way to allocate patterns among neighbours and eventually conflicts will occur with increasing number of adjacent cells.

According to at least some examples of embodiments, in this specification, it is proposed a negotiation method that allows e.g. two neighbouring NG-RAN nodes (NG-RAN node A, NG-RAN node B) and/or two gNB-DUs to negotiate / coordinate cell DTX and cell DRX pattern preferences over the Xn and/or the F1 interface, respectively. In addition, there is proposed coordination parameter provision to enable a NG-RAN node (gNB-CU) or a gNB-DU to choose cell DTX or cell DRX patterns reducing and/or minimizing conflicts with adjacent cells. As outlined above, both DL inter-cell interference (cell DTX) and UL inter-cell interference (cell DRX) optimization problems are similar, so it is described herein the same solution for negotiation of each of the cell DRX and cell DTX patterns. Specifically, a node B may indicate to a neighbour node A a conflict with respect to a pattern that node A uses over one or more cells. In addition, node B may provide to node A coordination parameters indicating a suggested resolution to the conflict by providing a preference over other patterns that node A may be using. This cell DTX/DRX coordination parameters may consist of at least one of **i)** to **iii):**
**i) Information relative to pattern orthogonality in time:** This can be achieved in several ways, e.g.,
   - By signalling of a self-contained alternative pattern description e.g., a cell activity bitmap. Together with the proposed pattern, a proposed probability, with which the pattern will be used, may be provided. As another option, a pattern may also be indicated through a probability distribution over the different times when a slot may be on or off.
   - By providing a time offset with reference to already signaled pattern. By delaying the starting time of a used pattern ON-duration by an offset (defining the start of the periodic active times), a neighbouring node may get sufficient conflict-free transmission opportunities (as this would decrease the amount of overlap in time of the cell activity). Taking into account that the (periodic) cell DTX/DRX pattern is continuously repeated as long as the cell DTX and/or cell DRX mode of operation is enabled, this corresponds to a time shift of the pattern by the applied offset.
**ii) Information relative to desired pattern density of active time:** A node may indicate to a neighbour desired characteristics with respect to the pattern density that the chosen patterns at the neighbour shall have. This can be done by an indication (e.g., a percentage) of a desired pattern density. Specifically, node B may indicate that a higher proportion of non-active time in node A is desirable (which will subsequently increase the proportion of optimal scheduling occasions in node B). As another option, node B may indicate that a lower proportion of non-active time in node A is desirable (which will subsequently reduce the overall UL or DL inter-cell interference if node A transmits at lower powers). This can also be done by signalling of self-contained alternative pattern description(s) (e.g. bitmap(s)) which may be associated with a preference indication (e.g., with respect to a desired pattern density) in case multiple patterns are proposed.
**iii) Information relative to desired power and/or antenna characteristics that a pattern should have:** A node may indicate the desired PDSCH power and/or number of TRXs/antenna elements that the chosen pattern shall have at the neighbour. This can be done by an indication of a desired range. Specifically, node B may indicate that a lower power level / reduced number of antennas during active time in node A is desirable. Furthermore, indication of different pattern density can be provided as well.
For example, when the number of conflicting neighbouring adjacent cells increases, it may be preferable to spread the DL transmissions over additional cell DTX active time while e.g. transmitting at lower powers which will in effect reduce the experienced inter-cell DL interference. As one extreme, the combination of high DL load and many adjacent cells therefore may lead to the need for continuous transmission so that all available slots are used even though the cell DTX feature is enabled. Such situation may be a trigger to the node to switch-off its DTX feature.

A node receiving the preference indication can determine how to resolve / alleviate conflicting requests. In one option it can do this by updating the cell DTX or DRX pattern in conflict with a pattern in the preferred list of its neighbour. In another option, it can update the probability with which it uses different patterns e.g., by reducing the probability of using DTX or DRX patterns that are in conflict with its neighbours and thus less preferred or by increasing the probability of using patterns that neighbours indicate preference. If multiple neighbours indicate conflicts of one or more patterns over a certain cell, the node may use the preference indication received from one or more neighbouring nodes to identify patterns that have sufficient preference from its neighbours in conflict. Conflicts indicated by multiple neighbouring nodes over adjacent cells may act as a trigger to the node to deactivate DTX and/or DRX and to return to legacy behaviour. A DTX or a DRX feature may be deactivated if the number of neighbouring nodes with adjacent cells exceeds a threshold or when the number of conflicting cells exceeds a threshold. As another option a node receiving information about a preferred pattern density, it can determine whether the requested density satisfies its traffic requirements and if so it may accommodate the request by selecting among available DTX or DRX patterns meeting the density requirements. If no such patterns exist, it may try to choose other patterns whose density is close to the preferred density as indicated by the neighbour (with respect to the sleeping time as opposed to active time opportunities of the patterns).

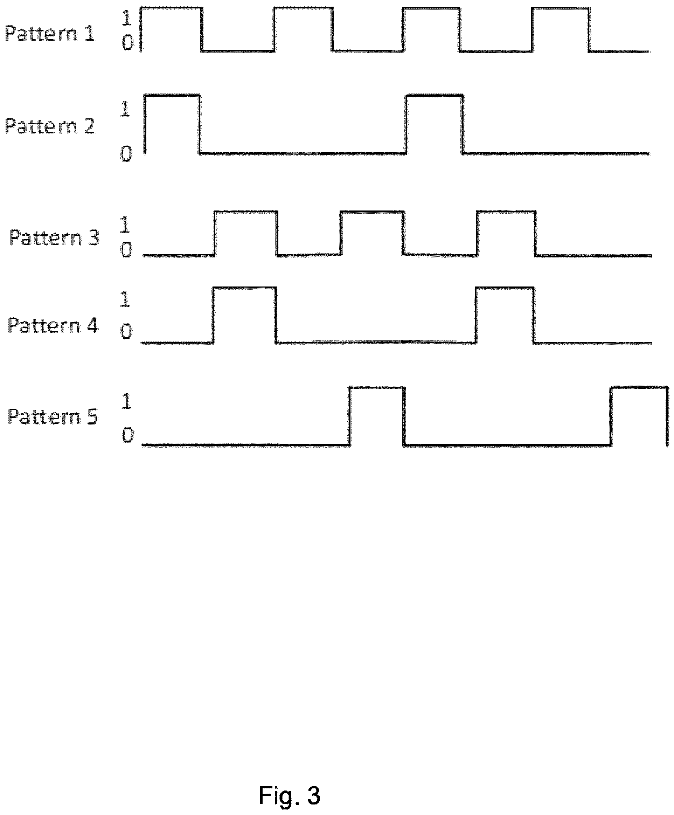

Referring now to Figure 3, Figure 3 shows different possible DTX patterns available at a NG-RAN node. High level corresponds to the DTX/DRX active time, while low level corresponds to DTX/DRX non-active time. Higher level corresponds to use of e.g. higher power or larger bandwidth.

A motivation behind the idea underlying the present specification is shown in Figure 3. Assume an NG-RAN node that may use either pattern 1 or pattern 2 during its DTX operation over a certain cell. If both patterns can sustain the traffic and QoS targets at the node, the node will prefer to use pattern 2 whenever possible (as opposed to pattern 1) since it enables more sleeping opportunities. However, this means that during the time when DTX is enabled, the node may be transmitting at higher power (and utilizing all the available resources) to accommodate the traffic, which implies that the interference caused to other NG-RAN nodes during the on-duration can be much higher. If the number of neighbours is sufficiently low, then a neighbouring NG-RAN node could utilize an orthogonal pattern over a certain cell, such as pattern 3, 4, or 5 in the example of Figure 1 to reduce and/or minimize interference. However, if adjacent cells in 3 NG-RAN nodes are using patterns 2, 4, and 5, a fourth adjacent cell cannot choose a pattern in an orthogonal way. Furthermore, since all the other neighbours are fully transmitting (at high powers) during the on-duration of their patterns the interference can be significant.

Let there be defined a pattern density indication to be provided as a percentage of active slots compared to the overall slots of the pattern. Pattern density can be defined for a cell DTX pattern. Pattern density may also be defined for a cell DRX pattern. For example, if 25% density is indicated it can mean that 2 out of 8 slots are occupied per cell DTX cycle or per cell DRX cycle with transmissions/receptions while the remaining 6 slots correspond to slots where no transmission or reception takes place. Such density could correspond to patterns 2, 4 or 5 in Figure 3. A 100% density would correspond to the extreme case of continuous transmission or reception. If a pattern density (either for DTX or DRX pattern) exceeds a certain threshold, this can act as a trigger to a node to disable the cell DTX/DRX feature.

One way of indicating a pattern density is through the pattern that is being used so that it is indicated through the cell DTX or cell DRX pattern itself. A cell DTX or DRX pattern may also indicate where the non-active time is as opposed to the active time within the DTX or DRX cycle.

A certain offset could be also provided to delay the beginning of the pattern (on-duration) by a certain time period (corresponding to a shift of the continuously repeated pattern). For example, an offset of a certain time duration or of a certain number of slots could indicate that once cell DRX or DTX operation is enabled, the periodic active time (on-duration) is started at the time described by the offset. In a preferred example, the offset is chosen in order to reduce and/or minimize simultaneous active periods in adjacent cells, which will allow neighbouring cells to enjoy conflict free operation.

Density and offset parameters may be associated with an indicated preference with respect to the patterns that the node prefers the neighbour a) to use or b) not to use. The preference can be indicated **i)** explicitly or **ii)** implicitly.
**i) Explicit preference indication:**
   - **Quantitative way:** The preference indication can be provided in a quantitative way e.g., through a number in e.g. 1-100 with 1 indicating the least preferred pattern and 100 indicating the most preferred pattern. This number could be a preference id associated with a DTX pattern. Note that the list could also be indicated such that number 1 indicates the most preferred pattern and number 100 the least preferred pattern.
   - **Qualitative way:** The preference may also be indicated in a qualitative way, e.g., low, medium, high with low indicating the least preferred pattern and high the most preferred pattern.
**ii) Implicit preference indication:** This can be provided in an implicit way through the order with which the patterns are listed. The first pattern sent in a preference list can be the most preferred pattern while the last pattern can be the least preferred pattern (order can also be such that the least preferred pattern is indicated first).

A node receiving cell DTX/DRX coordination parameters should use these coordination parameters when possible to (ideally avoid) reduce and/or minimize conflicts with its neighbours. For example, it shall try to use patterns with high indicated preference by its neighbours or should try to avoid use of patterns with a small, indicated preference by its neighbours.

Preference indication can be provided over all the patterns that a neighbouring node has signaled to use. Alternatively, to reduce signaling, preference indication can also be provided only for the patterns that a neighbour is expected to use with high probability by comparing this probability to a threshold. This probability of pattern usage can be indicated by the neighbour along with its patterns or may be inferred by a node based on observed interference from a neighbour.

In the following, according to various examples of embodiments, there are shown examples of exchange of cell DTX/DRX related information between NG-RAN nodes and between the gNB-Distributed Unit (DU) and the gNB-Centralized Unit (CU). Information exchange between NG-RAN nodes may use new or existing signalling procedures over the Xn interface. In case of absence of Xn interface, signalling via the core network may be used (not illustrated in Figure 3). Information exchange between the gNB-DU and the gNB-CU may use new or enhancements of existing signalling procedures over the F1 interface.

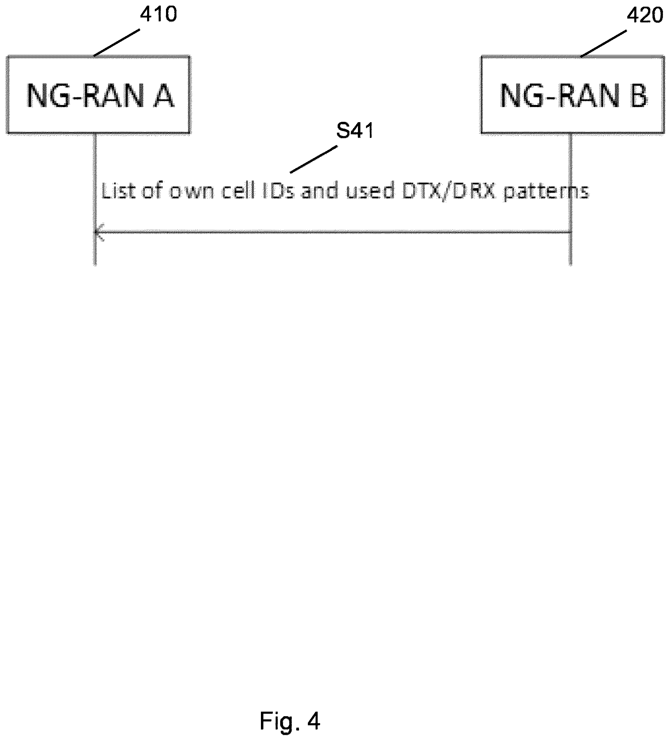

Referring now to Figure 4, Figure 4 shows an exchange of information related to used cell DTX/DRX patterns between NG-RAN nodes according to various examples of embodiments. This information exchange may happen when the cell DTX/DRX mode of operation becomes enabled or in case of an update in the used patterns by a NG-RAN node. Such information exchange may also be used to inform neighbour nodes that the cell DTX/DRX is disabled. The used patterns may be signaled by a NG-RAN node to a neighbour either as a bitmap or as a bitmap together with a probability with which the bitmap will be used by a node or as a probability vector indicating a probability distribution over slots that may be on or off, to give a few examples. As an option, the implementation may limit sending of cell DTX or cell DRX patterns only to nodes serving adjacent cells.

Particularly, in Figure 4, two neighbouring nodes NG-RAN node A 410 and NG-RAN node B 420 are shown, wherein NG-RAN-node B 420 provides in S41 information to NG-RAN node A 410. Such information may comprise a list of cell IDs corresponding to cells/radio cells served by the NG-RAN node B 420 and/or cell DTX and cell DRX patterns available (and used and/or intended to be used) at the NG-RAN B 420. Optionally, the NG-RAN node B 420 may not provide all cell DTX and cell DRX patterns available, but only the cell DTX and cell DRX patterns used and/or intended to be used by the NG-RAN node B 420 for a cell, which is adjacent to a cell served by the NG-RAN node A 410. NG-RAN node B 420 may also optionally provide NG-RAN node A 410 with coordination parameters to enable NG-RAN node A 410 to select patterns that will ideally not create but at least reduce and/or minimize conflicts with the cells of the NG-RAN node B 420. Coordination parameters, as outlined below in further detail, may be a preferred pattern list over the patterns used by the neighbour node NG-RAN node A 410 and is sent with respect to the identified adjacent cells of the neighbour node. In the list, NG-RAN node B 420 may identify a set and/or subset of patterns it prefers to be used by the adjacent cells of its neighbouring nodes. Coordination parameters may further comprise a suggested update in the used pattern probability by NG-RAN node A 410 (e.g., a suggestion and/or preference to use with a smaller probability patterns of high conflict). Another possible type of coordination parameters is to suggest to a neighbour to use patterns satisfying a certain pattern density e.g., patterns that contain a higher proportion of non-active time (which will subsequently increase the proportion of optimal scheduling occasions in e.g. NG-RAN node B with regard to Figure 4) or patterns with a lower proportion of non-active time (which will subsequently reduce the overall UL or DL inter-cell interference). Another possible type of coordination parameters is to provide information relative to the desired power and/or antenna characteristics that a desirable pattern at the neighbour should have. This can be done by indicating the desired PDSCH power and/or the number of TRXs/antenna elements that the chosen pattern shall have at the neighbour. Additionally, NG-RAN node B 420 may include a list of the cell DTX or cell DRX patterns it uses over its cells to the neighbouring NG-RAN A 410. The NG-RAN node A 410 receiving this information can use it to resolve the conflicts and may update its cell DTX or cell DRX patterns accordingly.

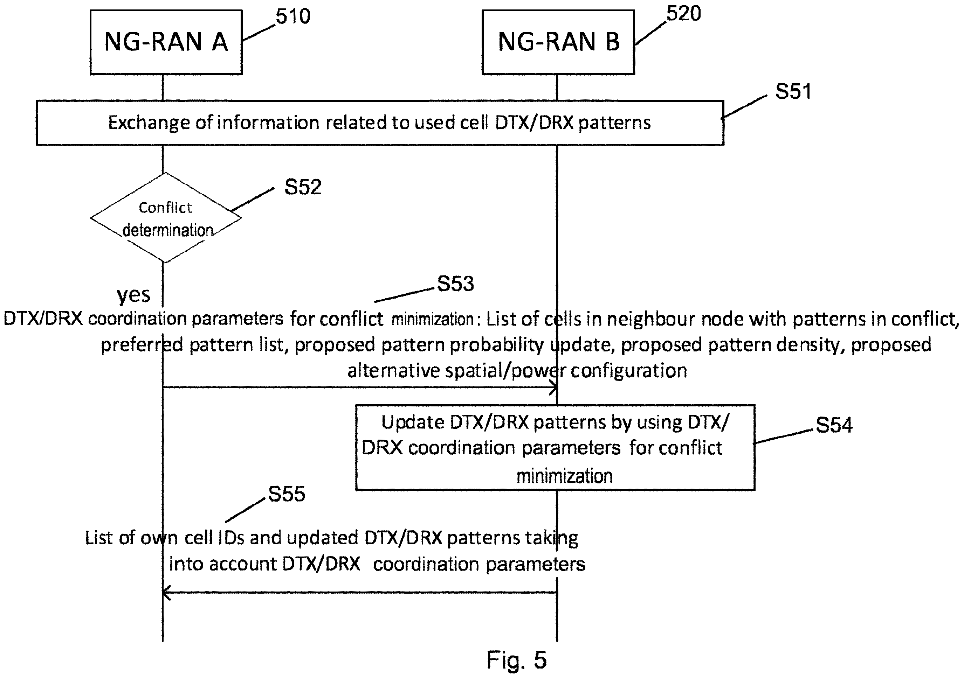

Referring now to Figure 5, Figure 5 shows an information exchange for inter-node cell DTX/DRX negotiation according to various examples of embodiments. Here, NG-RAN node B 520 sends, in S51 similar to the process outlined with reference to Figure 4, e.g. its cell DTX or cell DRX pattern information to its neighbouring nodes, NG-RAN node A 510 in Figure 5. Optionally, NG-RAN node A 510 may send its cell DTX or cell DRX pattern information to Ng-RAN node B 520. If neighbouring node NG-RAN node A 510 determines in S52 a conflict with one or more of the patterns used over its cells (either through observation of the conflict or through a prediction) it may send in S53 to NG-RAN node B 520, cell DTX or DRX coordination parameters to enable the NG-RAN node B 520 to resolve the occurred conflict. Conflict determination, which may be understood to comprise conflict detection as well as conflict prediction, could be determined when a node observes a conflict through increased interference levels or through increased number of errors in its transmissions (or receptions). As another possible option, a node could determine conflict by predicting its occurrence into the future. Coordination parameters may be a preferred pattern list over the patterns used by the neighbour NG-RAN node B 520 and is sent with respect to the identified adjacent cells of the neighbour node. In the list NG-RAN node A 510 may identify a subset of patterns it prefers to be used by the adjacent cells of its neighbouring nodes. Coordination parameters may further comprise a suggested update in the used pattern probability by NG-RAN node B 520 (e.g., a suggestion and/or preference to use with a smaller probability patterns of high conflict). Another possible type of coordination parameters is to suggest to a neighbour to utilize patterns satisfying a certain pattern density e.g., patterns that contain a higher proportion of non-active time (which will subsequently increase the proportion of optimal scheduling occasions in node A) or patterns with a lower proportion of non-active time (which will subsequently reduce the overall UL or DL inter-cell interference). Another possible type of coordination parameters is to provide information relative to the desired power and/or antenna characteristics that a desirable pattern at the neighbour should have. This can be done by indicating the desired PDSCH power and/or the number of TRXs/antenna elements that the chosen pattern shall have at the neighbour. Additionally, NG-RAN node A 510 may include a list of the cell DTX or cell DRX patterns it uses over its cells to the neighbouring NG-RAN node B 520. The NG-RAN node B 520 receiving this information can use it to reduce and/or minimize, ideally resolve the conflicts and may update in S54 its cell DTX or cell DRX patterns accordingly. It subsequently sends in S55 the updated pattern information to the neighbouring NG-RAN node A 510.

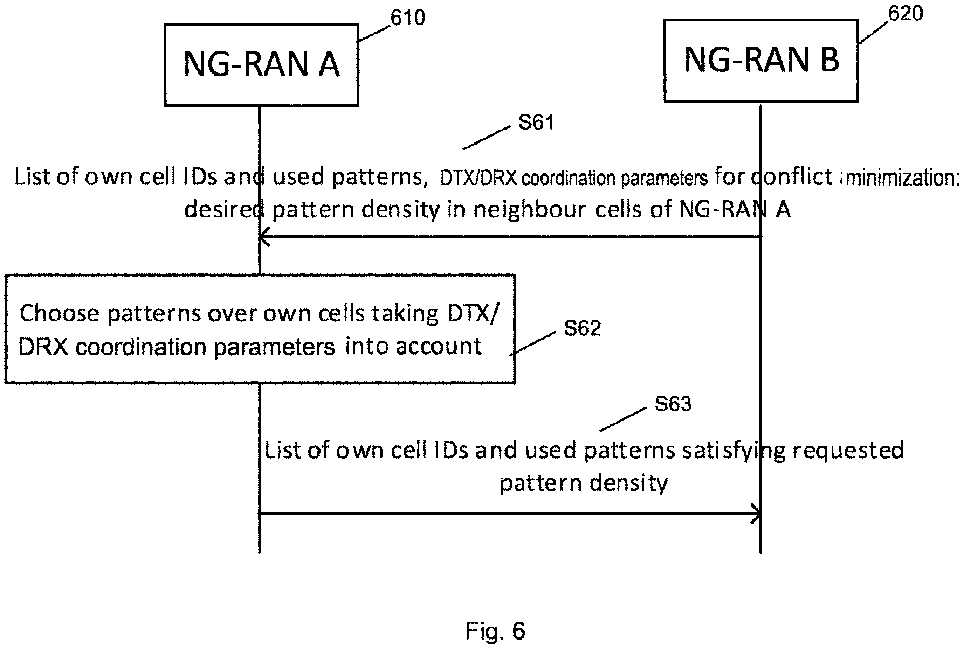

Referring now to Figure 6, Figure 6 shows that cell DTX/DRX coordination parameters are exchanged between neighbouring nodes to enable the latter select cell DTX or cell DRX patterns in a non-conflicting manner according to various examples of embodiments. DTX or DRX coordination parameters can be provided to a neighbouring node to reduce and/or minimize conflicts in the pattern selection. In this example, when NG-RAN node B 620 sends in S61 its cell DTX or cell DRX patterns to its neighbours, e.g. ND-RAN node A 610 in Figure 6, it can further include DTX/DRX coordination parameters on the desired patterns it wishes those neighbours to use. These coordination parameters can be used by NG-RAN node A 610 also operating in DTX/DRX mode of operation to select patterns in a non-conflicting way. In the example, coordination parameters with respect to a pattern density selection are provided to NG-RAN node A 610 having adjacent cells with NG-RAN node B 620. NG-RAN node A 610 takes this into account to select/choose in S62 cell DTX or cell DRX patterns over its adjacent cells to reduce and/or minimize conflicts and signals those in S63 to its neighbour(s). Figure 6 shows an example according to various examples of embodiments where a node provides a neighbour with its own pattern information and further provides it with coordination parameters for the neighbour to choose a good pattern configuration. Coordination parameters could also be sent in a message that is a separate message from the message indicating a list of its own cell IDs and used patterns. Besides the pattern density other types of coordination parameters may be provided e.g., a preferred pattern list, a proposed spatial/power configuration to name a few examples.

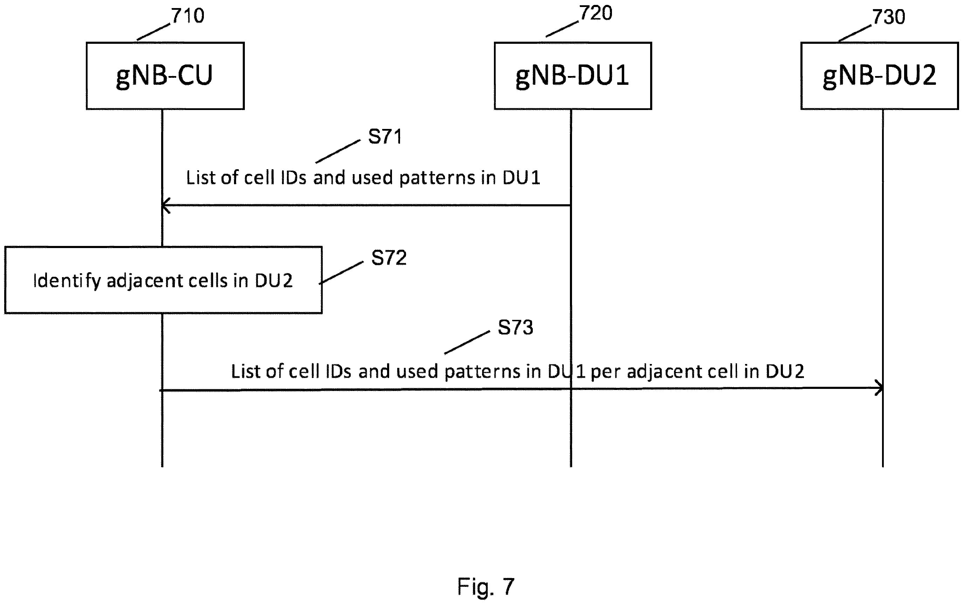

Referring now to Figure 7, Figure 7 shows an exchange of information related to used cell DTX/DRX pattern for intra NG-RAN node coordination according to various examples of embodiments. In cloud architecture, information related to cell DTX or cell DRX operation is required over the F1 interface for the purpose of informing gNB-DUs in intra NG-RAN node coordination and for inter NG-RAN node coordination.

Particularly, with reference to Figure 7, gNB-DU1 720 communicates with gNB-DU2 730 via gNB-CU 710. gNB-DU1 720 provides in S71 e.g. a list of cell IDs of its served cells as well as information about cell DTX and/or DRX pattern(s) used (and/or available and/or intended to be used at the gNB-DU1 720) to the gNB-CU 710. Based thereon, the gNB-CU 710 identifies nodes serving at least one cell, which is adjacent to a cell served by the gNB-DU1 720 (i.e. adjacent to a cell indicated by the cell IDs received). Hence, the gNB-CU 710 identifies in S72 cells/radio cells adjacent to the cells indicated via the received cell IDs. The gNB-CU 710 forwards in S73 the information received from the gNB-DU1 720 to the node(s) serving such adjacent cell(s), i.e. the gNB-DU2 730 shown in Figure 7 as an example. In doing so, the gNB-CU may optionally filter the information to be forwarded to the gNB-DU2 730 in that information in relation to cells of the gNB-DU1 720 adjacent to cells of the gNB-DU2 730 is forwarded, wherein information about cells of the gNB-DU1 720 not adjacent to cells of the gNB-DU2 730 is omitted.

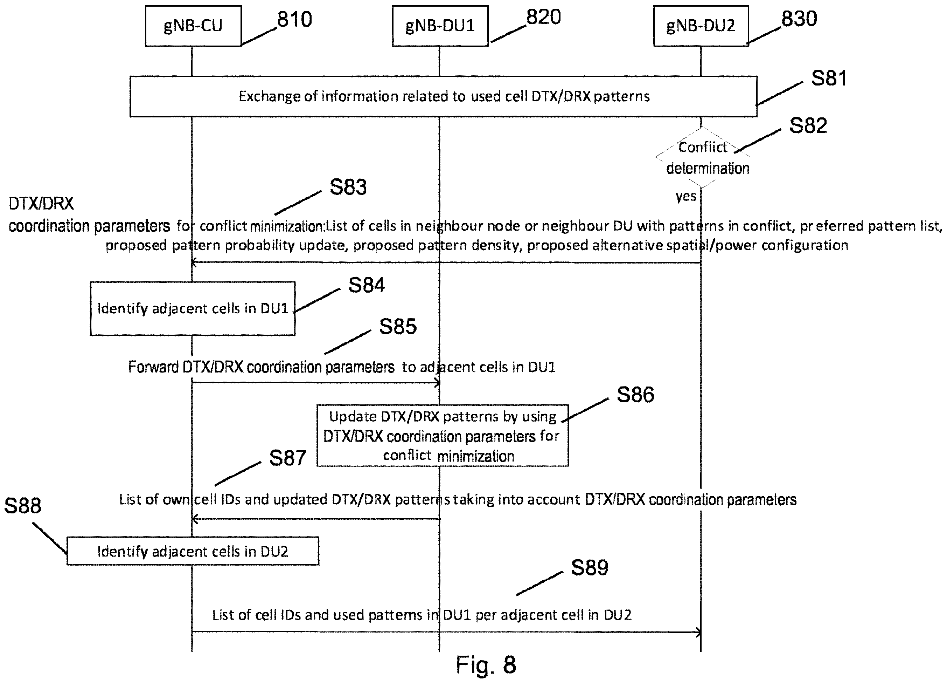

Referring now to Figure 8, Figure 8 shows an example of cell DTX/DRX negotiation procedure over F1 when conflict is determined by a gNB-DU, particularly gNB-DU2 830 in Figure 8, according to various examples of embodiments. Here, as another example in split architecture, the gNB-DU (gNB-DU2 830 in Figure 8) identifies, e.g. after an exchange of information in S81 related to used cell DTX/DRX patterns with a gNB-DU1 820 via a gNB-CU 810, similar to the process as outlined with reference to Figure 7, conflicting DTX/DRX patterns. Conflict determination, in e.g. S82, could be determined when a node observes a conflict through increased interference levels or through increased number of errors in its transmissions (or receptions). As another possible option, a node could determine conflict by predicting its occurrence into the future. The resulting information exchange between gNB-DUs (i.e. from the gNB-DU2 830 to the gNB-DU1 820 and vice versa) is done via the gNB-CU 810 as illustrated in Figure 8.

Particularly, with reference to Figure 8, the gNB-DU2 830 may provide in S83 the above-outlined information to the gNB-CU 810, which identifies in S84 the gNB-DU1 820 as a neighbouring node and forwards in S85 the, optionally filtered, received information from the gNB-DU2 830 to the gNB-DU1 820, which may perform an update procedure in S86, similar to such update procedure as outline above with reference to Figure 5. Further, the gNB-DU1 820 provides in S87 updated information in relation to its own served cells/radio cells (i.e. also corresponding cell IDs) as well as used (and or intended to be used) DTX/DRX pattern(s) for conflict reduction and/or minimization to the gNB-CU 810, wherein the gNB-CU 810, based on this information received, identifies in S88 the gNB-DU2 830 to be a neighbouring node of the gNB-DU1 820 and/or that DTX/DRX pattern(s) were updated for a cell, which is adjacent to a cell served by the gNB-DU 8302. The gNB-CU 810 forwards in S89, and may optionally filter, the updated information to the gNB-DU2 830, accordingly.

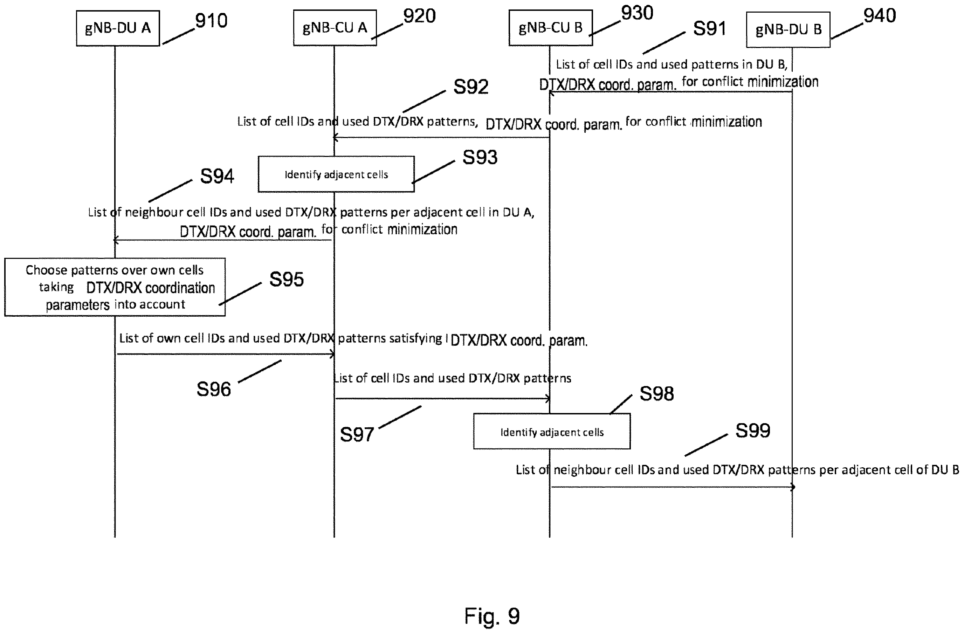

Referring now to Figure 9, Figure 9 shows an exchange of information related to used cell DTX/DRX pattern for inter NG-RAN node coordination according to various examples of embodiments. In the example, the gNB-DU B 940 determines the best cell DTX or cell DRX configuration information over its cells and sends it in S91 to the gNB-CU B 930. Similarly, a gNB-CU A 920 receives in S92 neighbour cell DTX and cell DRX information and DTX/DRX coordination parameters which it forwards in S94 to its gNB-DU(s) identified in S93, e.g. gNB-DU A 910 in Figure 9, to enable the latter select in S95 patterns that reduce and/or minimize conflicts. Similarly, steps S96 to S99 outline the steps for the gNB-DU B 940 to receive DTX/DRX pattern information in relation to cells of a neighboured node adjacent to at least one of its own cells.

Particularly, with reference to Figure 9, the process outlined is similar to the process outlined with reference to Figure 8, except for instead of the gNB-CU 810 of Figure 8 performing the identifying and receiving/forwarding alone, the process may now be split upon the gNB-CU B 930 communicatively connected with the gNB-DU B 940 and the gNB-CU A 920 communicatively connected with the gNB-DU A 910, wherein the gNB-CU B 930 is communicatively connected to the gNB-CU A 920. Hence, in the example, the gNB-DU B 940 determines the best cell DTX or cell DRX configuration information over its cells and sends it to the gNB-CU B 930. Similarly, the gNB-CU A 920 receives in S92 neighbour cell DTX and cell DRX information and DTX/DRX coordination parameters which it forwards to its, in S93 identified, gNB-DU(s) to enable the latter select in S95 patterns that reduce and/or minimize conflicts.

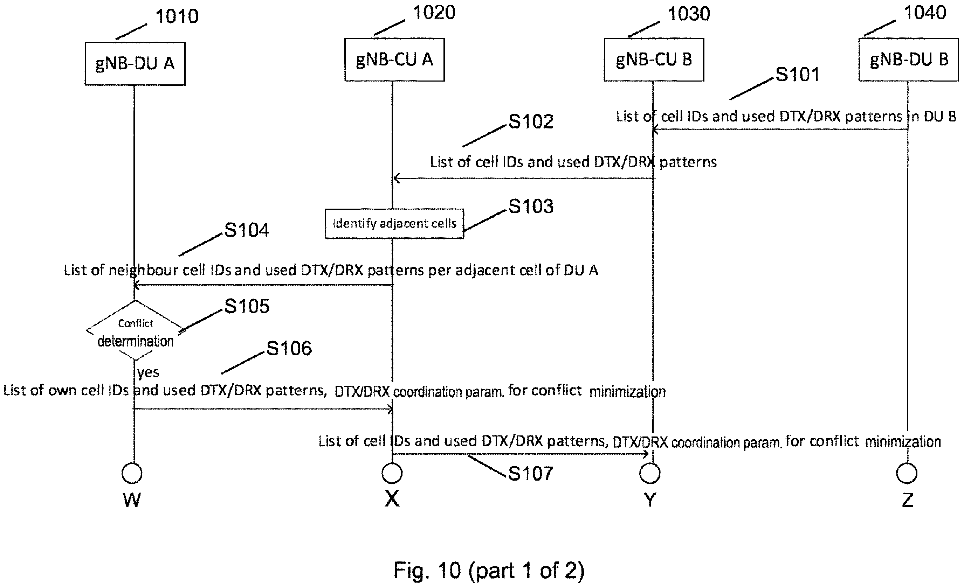

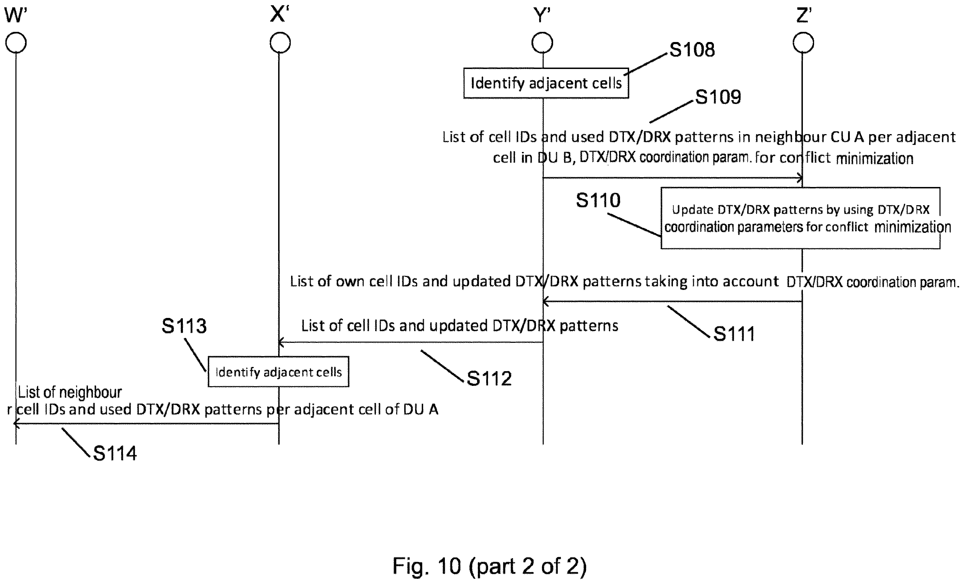

Referring now to Figure 10 (consisting of parts 1 of 2 and 2 of 2, wherein the two parts are to be connected so that W, X, Y and Z meet W, X', Y' and Z', respectively), Figure 10 shows an example of signalling in split architecture when cell DTX or cell DRX conflict is determined in a gNB-DU belonging to a different gNB according to various examples of embodiments.

Particularly, with reference to Figure 10, a gNB-DU B 1040 provides in S101 information about its cells served (e.g. list of cell IDs) as well as its used (and/or intended to use) DTX/DRX pattern(s) to the gNB-CU B 1030, which is enabled to further provide in S102 such information received, based on e.g. the cell IDs included, to a gNB-CU A 1020. The gNB-CU A 1020, based on such information received, identifies in S103, e.g. based on the cell IDs included, neighbouring node(s) serving at least one cell/radio cell which is adjacent to at least one cell derivable from the received cell IDs and forwards in S104 the information, optionally filtered as outlined above, to the identified neighbouring node, e.g. gNB-DU A 1010 in Figure 10. Similar to the process in Figure 5, gNB-DU A 1010 determines in S105 a conflict and provides in S106 own cell information (e.g. list of own cell IDs), information about used DTX/DRX pattern(s) and coordination parameters for conflict reduction and/or minimization. Such information provided by the gNB-DU A 1010 are received at the gNB-CU A 1020 and forwarded in S107 to the gNB-CU B 1030, which identifies in S108 the gNB-DU B 1040 to be a neighbouting node to the gNB-DU A 1010 based on e.g. identifying cells adjacent to the cells indicated by the cell IDs received. The information is forwarded in S109 to the gNB-DU B 1040, accordingly. The further process in Steps S110 to S114 is similar to the process outlined with reference to Figure 5, wherein, similar to above, the information provided in S111 by the gNB-DU B 1040 after the updating step S110 are forwarded in S112 and S114 to the gNB-DU A 1010 via the gNB-CU B 1030 and the gNB-CU A 1020.

In the following, further examples of embodiments are described in relation to the above described methods and/or apparatuses.

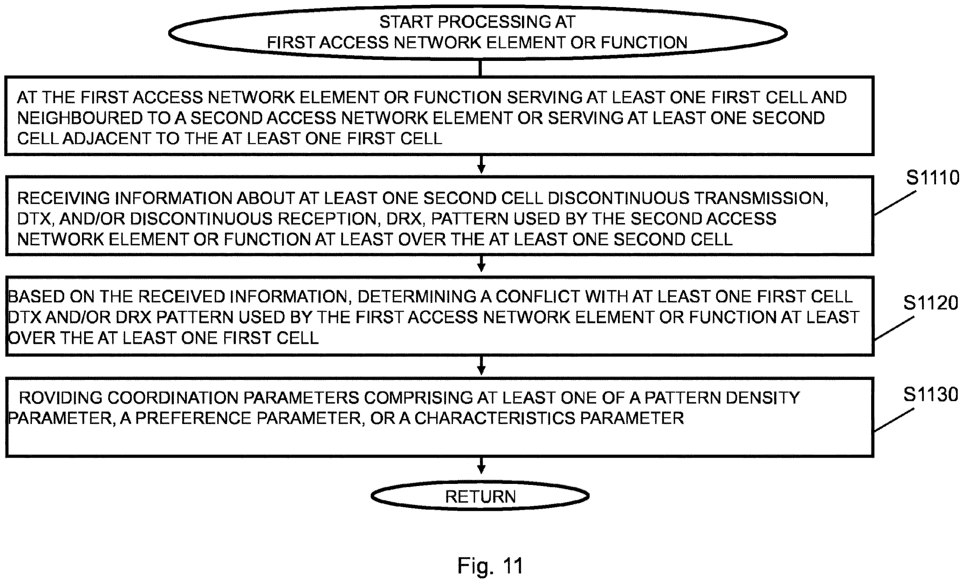

Referring now to Figure 11, there is shown a flowchart illustrating steps corresponding to a method according to various examples of embodiments. Such processing as derivable therefrom may represent at least part of such processing at outlined above with reference to Figures 4, 5, 7, 8 and 10 e.g. in reference to the NG- RAN A, the gNB-DU2, or the gNB-DU A.

In particular, according to Figure 11, a first access network element or function serves at least one first radio cell and is neighboured to a second access network element or function which serves at least one second radio cell adjacent to the at least one first radio cell.

In S1110, the method comprises receiving, at the first access network element or function, information about at least one second cell discontinuous transmission, DTX, and/or discontinuous reception, DRX, pattern used by the second access network element or function at least over the at least one second radio cell.

Further, in S1120, the method comprises, based on the received information, determining a conflict with at least one first cell DTX and/or DRX pattern used by the first access network element or function at least over the at least one first radio cell.

Additionally, in S1130, the method comprises providing coordination parameters comprising at least one of a pattern density parameter indicating a density of active time in a cell DTX and/or DRX pattern, a preference parameter indicating a preference with respect to a usage of at least one cell DTX and/or DRX pattern, or a characteristics parameter indicating a power and/or antenna characteristics for at least one cell DTX and/or DRX pattern.

Moreover, according to at least some examples of embodiments, in an optional step S1140, the method may further comprise receiving updated information in relation to an update of the at least one second cell DTX and/or DRX pattern.

Moreover, according to at least some examples of embodiments, the determining of the conflict may comprise at least one of, related to the at least one first radio cell,
- determining an increase in interference levels,
- determining an interference level to exceed a predetermined interference level threshold,
- determining an increased number of transmission and/or reception errors,
- determining transmission and/or reception errors to exceed a predetermined error threshold,
- predicting an increase in interference levels,
- predicting an interference level to exceed a predetermined interference level threshold,
- predicting an increased number of transmission and/or reception errors, or
- predicting transmission and/or reception errors to exceed a predetermined error threshold.

Furthermore, according to various examples of embodiments, the coordination parameters may further comprise at least one of
- a preferred pattern list indicating a list of at least one cell DTX and/or DRX pattern of which usage is preferred by the first access network element or function,
- a set of cell DTX and/or DRX patterns identified by the first access network element or function among the at least one second cell DTX and/or DRX pattern, of which usage is preferred by the first access network element or function,
- a preference to update a probability of using at least one cell DTX and/or DRX pattern among the at least one second cell DTX and/or DRX pattern,
- a preference to decrease a probability of using at least one cell DTX and/or DRX pattern among the at least one second cell DTX and/or DRX pattern,
- a preference to increase a probability of using at least one cell DTX and/or DRX pattern among the at least one second cell DTX and/or DRX pattern,
- a preference to use a cell DTX and/or DRX pattern containing a portion of non-active time equal to or above a predetermined non-active time threshold,
- a preference to use a cell DTX and/or DRX pattern containing a portion of non-active time below a predetermined non-active time threshold, or
- a preference to provide a predetermined DTX and/or DRX offset to a cell DTX and/or DRX cycle of at least one cell DTX and/or DRX pattern among the at least one second cell DTX and/or DRX pattern.

Additionally, according to various examples of embodiments, the preference may be indicated over all the at least one second cell DTX and/or DRX pattern, or the preference is indicated for cell DTX and/or DRX patterns among the at least one second cell DTX and/or DRX pattern that the second access network element or function is expected to use with a probability equal to or higher than a predetermined probability threshold.

Optionally, according to at least some examples of embodiments, the method may further comprise providing information in relation to at least one of
- radio cells served by the first access network element or function, the radio cells including the at least one first radio cell,
- first cell DTX and/or DRX patterns used by the first access network element or function over the radio cells, the first cell DTX and/or DRX patterns including the at least one first cell DTX and/or DRX pattern,
- the at least one first radio cell, or
- the at least one first cell DTX and/or DRX pattern.

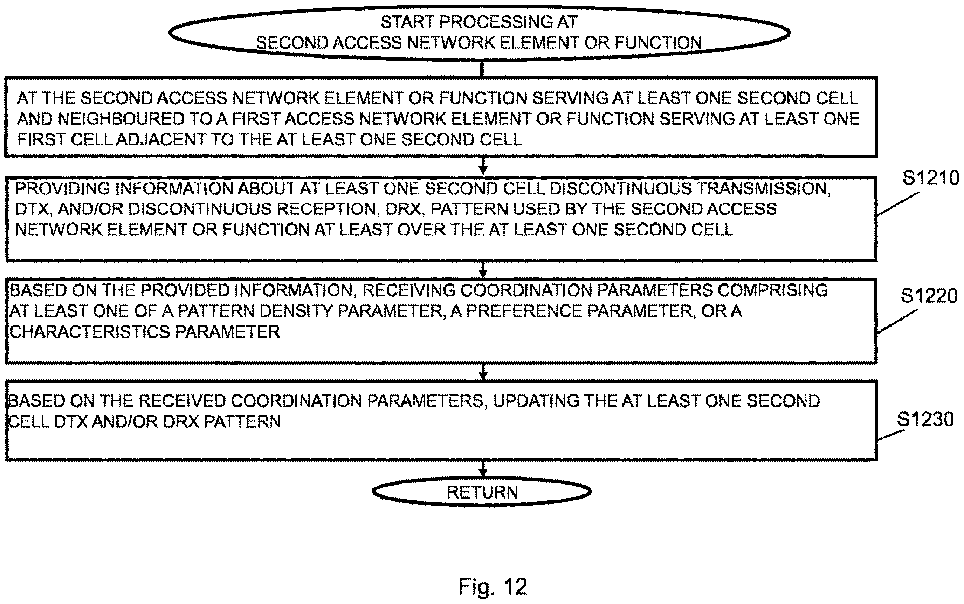

Referring now to Figure 12, there is shown a flowchart illustrating steps corresponding to a method according to various examples of embodiments. Such processing as derivable therefrom may represent at least part of such processing at outlined above with reference to Figures 4, 5, 7, 8 and 10 e.g. in reference to the NG- RAN B, the gNB-DU1, or the gNB-DU B.

In particular, according to Figure 12, a second access network element or function serves at least one second radio cell and is neighboured to a first access network element or function, which serves at least one first radio cell adjacent to the at least one second radio cell.

In S1210, the method comprises providing information about at least one second cell discontinuous transmission, DTX, and/or discontinuous reception, DRX, pattern used by the second access network element or function at least over the at least one second radio cell.

In S1220, the method comprises, based on the provided information, receiving coordination parameters comprising at least one of a pattern density parameter indicating a density of active time in a cell DTX and/or DRX pattern, a preference parameter indicating a preference with respect to a usage of at least one cell DTX and/or DRX pattern, or a characteristics parameter indicating a power and/or antenna characteristics for at least one cell DTX and/or DRX pattern.

In S1230, the method comprises, based on the received coordination parameters, updating the at least one second cell DTX and/or DRX pattern.

Further, according to various examples of embodiments, the method may further comprise in an optional step S1240 providing updated information in relation to the updated at least one second cell DTX and/or DRX pattern.

Further, according to various examples of embodiments, the updating may comprise at least one of
- updating the at least one second cell DTX and/or DRX pattern with a cell DTX and/or DRX pattern indicated by the patent density parameter,
- updating the at least one second cell DTX and/or DRX pattern with a cell DTX and/or DRX pattern from a preferred pattern list further provided in the coordination parameters,
- updating a probability of using a cell DTX and/or DRX pattern from the at least one second DTX and/or DRX pattern as further indicated in the coordination parameters,
- reducing a probability of using at least one cell DTX and/or DRX pattern among the at least one second cell DTX and/or DRX pattern as further indicated in the coordination parameters,
- increasing a probability of using at least one cell DTX and/or DRX pattern among the at least one second cell DTX and/or DRX pattern as further indicated in the coordination parameters,
- if the density indicated by the pattern density parameter allows to satisfy traffic requirements of the second access network element or function, accommodating the indicated density by selecting among cell DTX and/or DRX patterns meeting the indicated density,
- if there is no cell DTX and/or DRX pattern available at the second access network element or function to meet the density indicated by the pattern density parameter, selecting among the cell DTX and/or DRX patterns available at the second access network element or function at least one cell DTX and/or DRX pattern whose density differs from the indicated density by less than a predetermined pattern density threshold,
- providing and/or updating a DTX and/or DRX offset to a cell DTX and/or DRX cycle of at least one cell DTX and/or DRX pattern among the at least one second cell DTX and/or DRX pattern, or
- updating power and/or antenna characteristics for at least one cell DTX and/or DRX pattern among the at least one second cell DTX and/or DRX pattern as indicated by the characteristics parameter.

Moreover, according to at least some examples of embodiments, the method may further comprise receiving information about at least one of
- radio cells served by the first access network element or function, the radio cells including the at least one first radio cell,
- first cell DTX and/or DRX patterns used by the first access network element or function over the radio cells, the first cell DTX and/or DRX patterns including the at least one first DTX and/or DRX pattern,
- the at least one first radio cell, or
- the at least one first cell DTX and/or DRX pattern; and
updating the at least one second cell DTX and/or DRX pattern further based on the received information.

Furthermore, according to various examples of embodiments, the method may further comprise receiving a plurality of coordination parameters from a plurality of different access network elements or functions in relation to a conflict determined for the at least one second radio cell based on the at least one second cell DTX and/or DRX pattern used by the second access network element or function at least over the at least one second radio cell; comparing preferences for cell DTX and/or DRX patterns indicated in the received plurality of coordination parameters; and based on the comparing, identifying at least one cell DTX and/or DRX pattern with a preference equal to or above a predetermined preference threshold in relation to each of the preferences indicated in the plurality of coordination parameters

Additionally, according to various examples of embodiments, the method may further comprise receiving a plurality of coordination parameters from a plurality of different access network elements or functions in relation to conflicts determined for at least a predetermined number of radio cells among the radio cells served by the second access network element or function; deactivating cell DTX and/or DRX operation mode at the second access network element or function; and returning the second access network element or function to legacy behaviour.

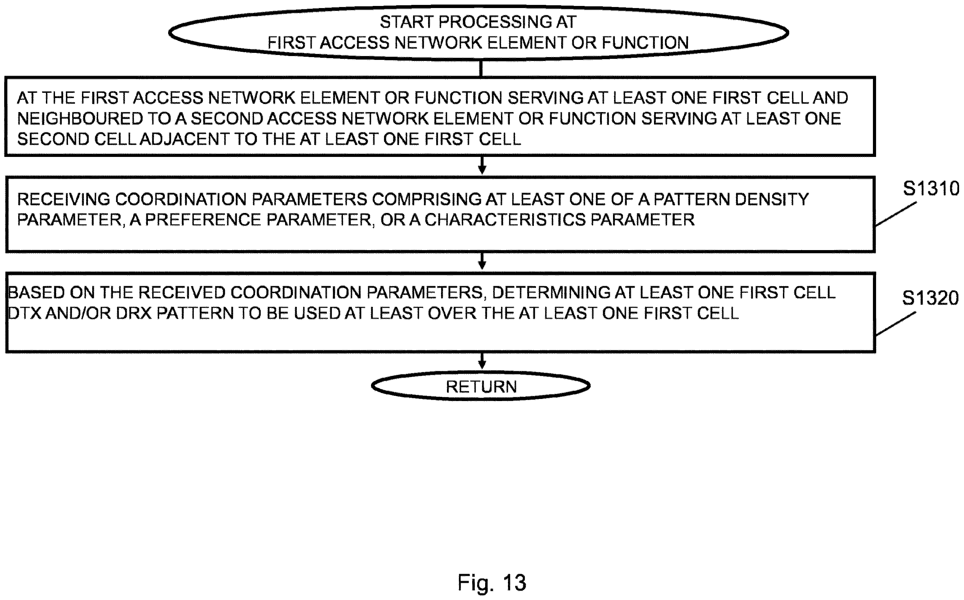

Referring now to Figure 13, there is shown a flowchart illustrating steps corresponding to a method according to various examples of embodiments. Such processing as derivable therefrom may represent at least part of such processing at outlined above with reference to Figures 6 and 9 e.g. in reference to the NG-RAN A and/or the gNB-DU A.

In particular, according to Figure 13, a first access network element or function serves at least one first radio cell and is neighboured to a second access network element or function, which serves at least one second radio cell adjacent to the at least one first radio cell.

In S1310, the method comprises receiving coordination parameters comprising at least one of a pattern density parameter indicating a density of active time in a cell DTX and/or DRX pattern, a preference parameter indicating a preference with respect to a usage of at least one cell DTX and/or DRX pattern, or a characteristics parameter indicating a power and/or antenna characteristics for at least one cell DTX and/or DRX pattern.

In S1320, the method comprises, based on the received coordination parameters, determining at least one first cell DTX and/or DRX pattern to be used at least over the at least one first radio cell.

According to at least some examples of embodiments the method may further comprise in an optional step S1330 providing information in relation to the determined at least one first cell DTX and/or DRX pattern.

Optionally, according to at least some examples of embodiments, the method may further comprise that the determining further comprises at least one of
- choosing a cell DTX and/or DRX pattern indicated by the patent density parameter,
- choosing a cell DTX and/or DRX pattern from a preferred pattern list further provided in the coordination parameters,
- updating a probability of using a cell DTX and/or DRX pattern from the at least one first DTX and/or DRX pattern as further indicated in the coordination parameters,
- reducing a probability of using at least one cell DTX and/or DRX pattern among the at least one first cell DTX and/or DRX pattern as further indicated in the coordination parameters,
- increasing a probability of using at least one cell DTX and/or DRX pattern among the at least one first cell DTX and/or DRX pattern as further indicated in the coordination parameters,
- if the density indicated by the pattern density parameter allows to satisfy traffic requirements of the first access network element or function, accommodating the indicated density by selecting among cell DTX and/or DRX patterns meeting the indicated density,
- if there is no cell DTX and/or DRX pattern available at the first access network element or function to meet the density indicated by the pattern density parameter, choosing among the cell DTX and/or DRX patterns available at the first access network element or function at least one cell DTX and/or DRX pattern whose density differs from the indicated density by less than a predetermined pattern density threshold,
- providing and/or updating a DTX and/or DRX offset to a cell DTX and/or DRX cycle of at least one cell DTX and/or DRX pattern among the at least one first cell DTX and/or DRX pattern, or
- choosing power and/or antenna characteristics for at least one cell DTX and/or DRX pattern among the at least one first cell DTX and/or DRX pattern as indicated by the characteristics parameter.

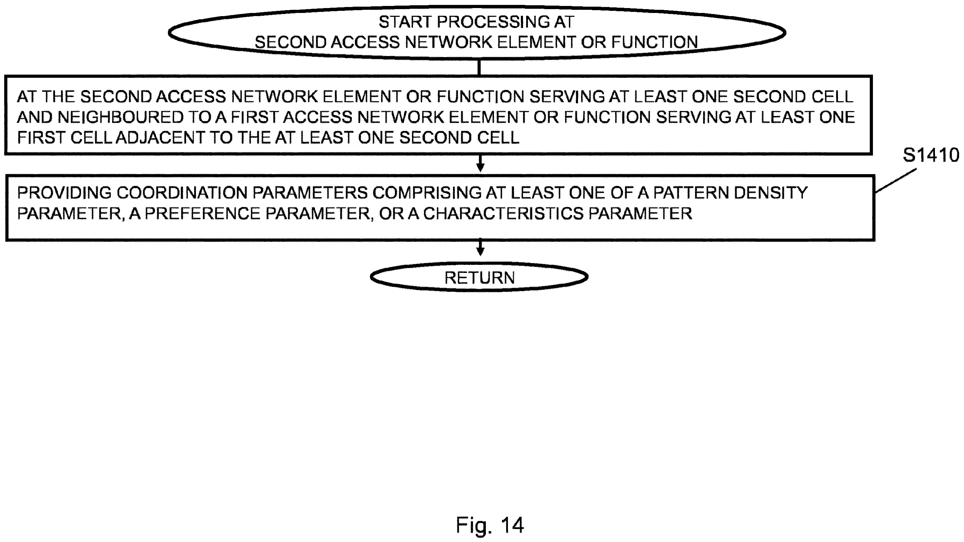

Referring now to Figure 14, there is shown a flowchart illustrating steps corresponding to a method according to various examples of embodiments. Such processing as derivable therefrom may represent at least part of such processing at outlined above with reference to Figures 6 and 9 e.g. in reference to the NG-RAN B and/or the gNB-DU B.

In particular, according to Figure 14, a second access network element or function serves at least one second radio cell and is neighboured to a first access network element or function, which serves at least one first radio cell adjacent to the at least one second radio cell.

In S1410, the method comprises providing coordination parameters comprising at least one of a pattern density parameter indicating a density of active time in a cell DTX and/or DRX pattern, a preference parameter indicating a preference with respect to a usage of at least one cell DTX and/or DRX pattern, or a characteristics parameter indicating a power and/or antenna characteristics for at least one cell DTX and/or DRX pattern.

Further, according to various examples of embodiments, the method may further comprise in an optional step S1420, based on the provided coordination parameters, receiving information about determined at least one first cell DTX and/or DRX pattern to be used by the first access network element or function at least over the at least one first radio cell.

Further, according to various examples of embodiments, the coordination parameters may further comprise at least one of
- a preferred pattern list indicating a list of at least one cell DTX and/or DRX pattern of which usage is preferred by the second access network element or function,
- a set of cell DTX and/or DRX patterns identified by the second access network element or function among at least one first cell DTX and/or DRX pattern available at the first access network element or function, of which usage is preferred by the second access network element or function,
- a preference to update a probability of using at least one cell DTX and/or DRX pattern among the at least one first cell DTX and/or DRX pattern,
- a preference to decrease a probability of using at least one cell DTX and/or DRX pattern among the at least one first cell DTX and/or DRX pattern,
- a preference to increase a probability of using at least one cell DTX and/or DRX pattern among the at least one first cell DTX and/or DRX pattern,
- a preference to use a cell DTX and/or DRX pattern containing a portion of non-active time equal to or above a predetermined non-active time threshold,
- a preference to use a cell DTX and/or DRX pattern containing a portion of non-active time below a predetermined non-active time threshold, or
- a preference to provide a predetermined DTX and/or DRX offset to a cell DTX and/or DRX cycle of at least one cell DTX and/or DRX pattern among the at least one first cell DTX and/or DRX pattern.

Moreover, according to at least some examples of embodiments, with regard to the above-outlined methods and/or method steps with reference to Figures 11 to 14, the following shall be noted.

If the first access network element or function may be a first NG-RAN node and the second access network element or function may be a second NG-RAN node, the providing and/or receiving may further comprise at least one of providing and/or receiving via an Xn interface available between the first NG-RAN node and the second NG-RAN node, or providing and/or receiving between the first NG-RAN node and the second NG-RAN node via the core network.

If the first access network element or function may be a first gNB-DU and the second access network element or function may be a second gNB-DU, wherein the first gNB-DU and the second gNB-DU may be associated with a same gNB-CU, the providing and/or receiving may further comprise providing and/or receiving between the first gNB-DU and the second gNB-DU via the gNB-CU and F1 interface.

If the first access network element or function may be a first gNB-DU associated with a first gNB-CU and the second access network element or function may be a second gNB-DU associated with a second gNB-CU, the providing and/or receiving may further comprise providing and/or receiving between the first gNB-DU and the second gNB-DU via the first gNB-CU and the second gNB-CU and F1 interface.

The solutions as outlined above with reference to Figures 11 to 14 allow for cell DTX and cell DRX negotiation. Therefore, the above-outlined solution is advantageous in that it enables for efficient and/or secure and/or robust and/or failure resistant and/or flexible cell DTX and cell DRX negotiation.

In more detail, the solutions as outlined above with reference to Figures 11 to 14 are advantageous over the prior art, since they e.g. enable to coordinate between NG-RAN nodes when the cell DTX and/or cell DRX is enabled, in order to reduce and/or minimize, ideally to avoid/resolve the inter-cell interference. They further enable to e.g. reduce and/or minimize, ideally avoid and resolve eventual intra/inter-nodes conflicts from cell DTX/DRX patterns allocation through existing signaling over Xn and/or F1 interfaces.

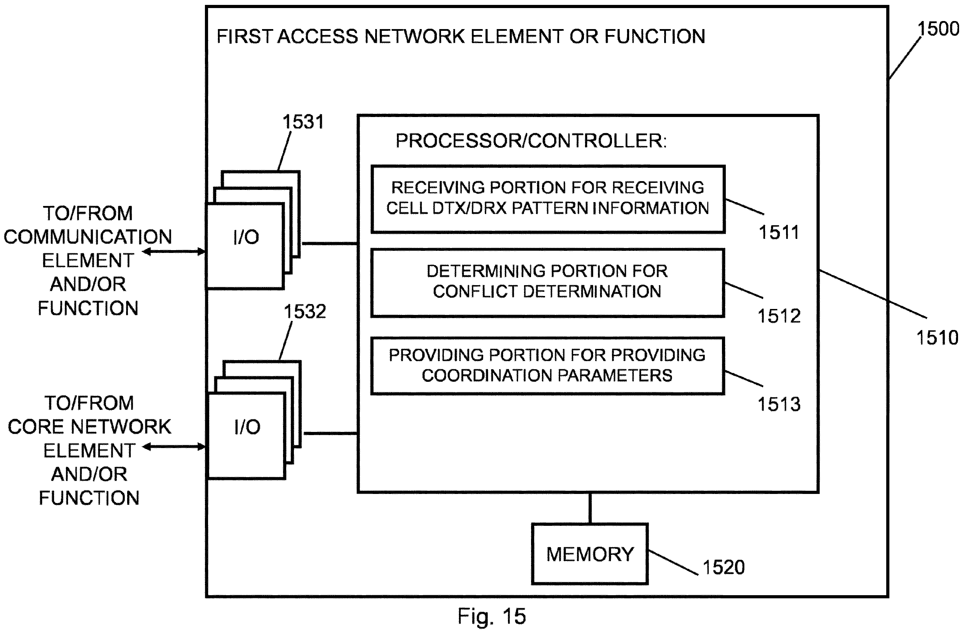

Referring now to Figure 15, Figure 15 shows a block diagram illustrating an apparatus according to various examples of embodiments.

Specifically, Figure 15 shows a block diagram illustrating an apparatus 1500, which may represent a first access network element or function, like e.g. such NG-RAN A and/or gNB-DU2 and/or gNB-DU A as outlined with reference to Figures 5, 8 and 10, according to various examples of embodiments, which may participate in cell DTX and cell DRX negotiation. Furthermore, even though reference is made to a first access network element or function, the first access network element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 1500 shown in Figure 15 may include a processing circuitry, a processing function, a control unit or a processor 1510, such as a CPU or the like, which is suitable to enable cell DTX and cell DRX negotiation. The processor 1510 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1531 and 1532 denote input/output (I/O) units or functions (interfaces) connected to the processor or processing function 1510. The I/O units 1531 and 1532 may be a combined unit including communication equipment towards several entities/elements, or may include a distributed structure with a plurality of different interfaces for different entities/elements. Reference sign 1520 denotes a memory usable, for example, for storing data and programs to be executed by the processor or processing function 1510 and/or as a working storage of the processor or processing function 1510. It is to be noted that the memory 1520 may be implemented by using one or more memory portions of the same or different type of memory, but may also represent an external memory, e.g. an external database provided on a cloud server.

The processor or processing function 1510 is configured to execute processing related to the above described processing. In particular, the processor or processing circuitry or function 1510 includes one or more of the following sub-portions. Sub-portion 1511 is a receiving portion, which is usable as a portion for receiving radio cell information. The portion 1511 may be configured to perform processing according to S1110 of Figure 11. Further, sub-portion 1512 is a determining portion, which is usable as a portion for conflict determination. The portion 1512 may be configured to perform processing according to S1120 of Figure 11. Moreover, sub-portion 1513 is a providing portion, which is usable as a portion for providing coordination parameters. The portion 1513 may be configured to perform processing according to S1130 of Figure 11.

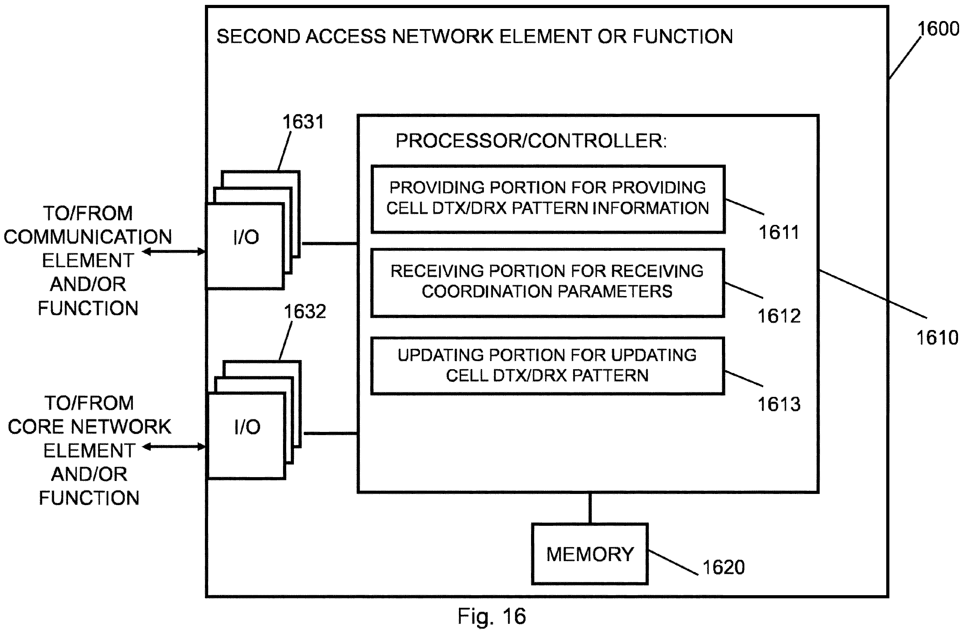

Referring now to Figure 16, Figure 16 shows a block diagram illustrating an apparatus according to various examples of embodiments.

Specifically, Figure 16 shows a block diagram illustrating an apparatus 1600, which may represent a second access network element or function, like e.g. such NG-RAN B and/or gNB-DU1 and/or gNB-DU B as outlined above with reference to Figures 5, 8 and 10, according to various examples of embodiments, which may participate in cell DTX and cell DRX negotiation. Furthermore, even though reference is made to a second access network element or function, the second access network element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 1600 shown in Figure 16 may include a processing circuitry, a processing function, a control unit or a processor 1610, such as a CPU or the like, which is suitable to enable cell DTX and cell DRX negotiation. The processor 1610 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1631 and 1632 denote input/output (I/O) units or functions (interfaces) connected to the processor or processing function 1610. The I/O units 1631 and 1632 may be a combined unit including communication equipment towards several entities/elements, or may include a distributed structure with a plurality of different interfaces for different entities/elements. Reference sign 1620 denotes a memory usable, for example, for storing data and programs to be executed by the processor or processing function 1610 and/or as a working storage of the processor or processing function 1610. It is to be noted that the memory 1620 may be implemented by using one or more memory portions of the same or different type of memory, but may also represent an external memory, e.g. an external database provided on a cloud server.

The processor or processing function 1610 is configured to execute processing related to the above described processing. In particular, the processor or processing circuitry or function 1610 includes one or more of the following sub-portions. Sub-portion 1611 is a providing portion, which is usable as a portion for providing radio cell information. The portion 1611 may be configured to perform processing according to S1210 of Figure 12. Further, sub-portion 1612 is a receiving portion, which is usable as a portion for receiving coordination parameters. The portion 1612 may be configured to perform processing according to S1220 of Figure 12. Moreover, sub-portion 1613 is an updating portion, which is usable as a portion for updating cell DTX and/or DRX pattern. The portion 1613 may be configured to perform processing according to S1230 of Figure 12.

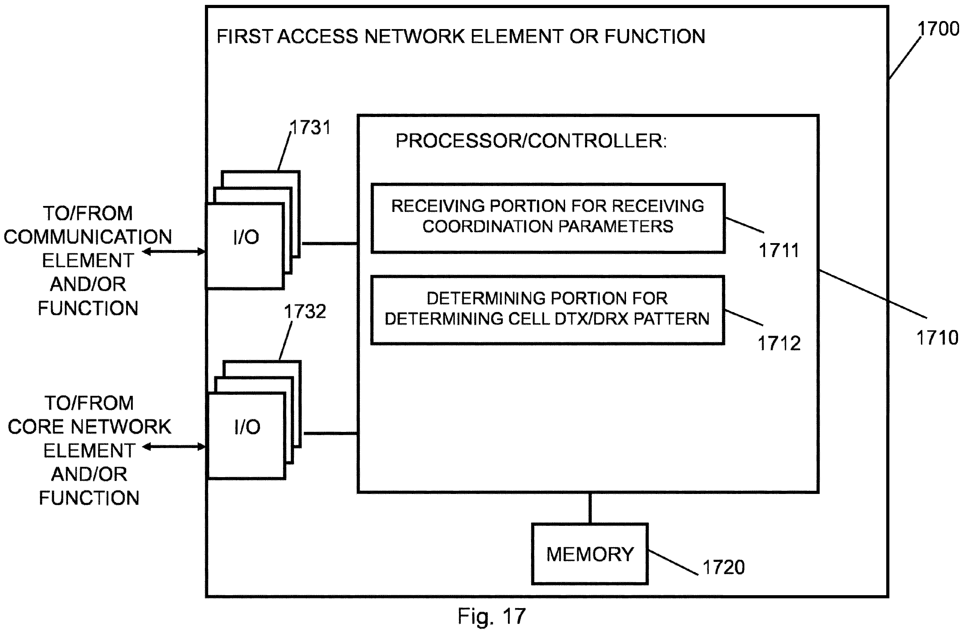

Referring now to Figure 17, Figure 17 shows a block diagram illustrating an apparatus according to various examples of embodiments.

Specifically, Figure 17 shows a block diagram illustrating an apparatus 1700, which may represent a first access network element or function, like e.g. such NG-RAN A and/or gNB-DU A as outlined above with reference to Figures 6 and 9, according to various examples of embodiments, which may participate in cell DTX and cell DRX negotiation. Furthermore, even though reference is made to a first access network element or function, the first access network element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 1700 shown in Figure 17 may include a processing circuitry, a processing function, a control unit or a processor 1710, such as a CPU or the like, which is suitable to enable cell DTX and cell DRX negotiation. The processor 1710 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1731 and 1732 denote input/output (I/O) units or functions (interfaces) connected to the processor or processing function 1710. The I/O units 1731 and 1732 may be a combined unit including communication equipment towards several entities/elements, or may include a distributed structure with a plurality of different interfaces for different entities/elements. Reference sign 1720 denotes a memory usable, for example, for storing data and programs to be executed by the processor or processing function 1710 and/or as a working storage of the processor or processing function 1710. It is to be noted that the memory 1720 may be implemented by using one or more memory portions of the same or different type of memory, but may also represent an external memory, e.g. an external database provided on a cloud server.

The processor or processing function 1710 is configured to execute processing related to the above described processing. In particular, the processor or processing circuitry or function 1710 includes one or more of the following sub-portions. Sub-portion 1711 is a receiving portion, which is usable as a portion for receiving radio cell information and coordination parameters. The portion 1711 may be configured to perform processing according to S1310 of Figure 13. Further, sub-portion 1712 is a choosing portion, which is usable as a portion for choosing cell DTX and/or DRX pattern. The portion 1712 may be configured to perform processing according to S1320 of Figure 13.

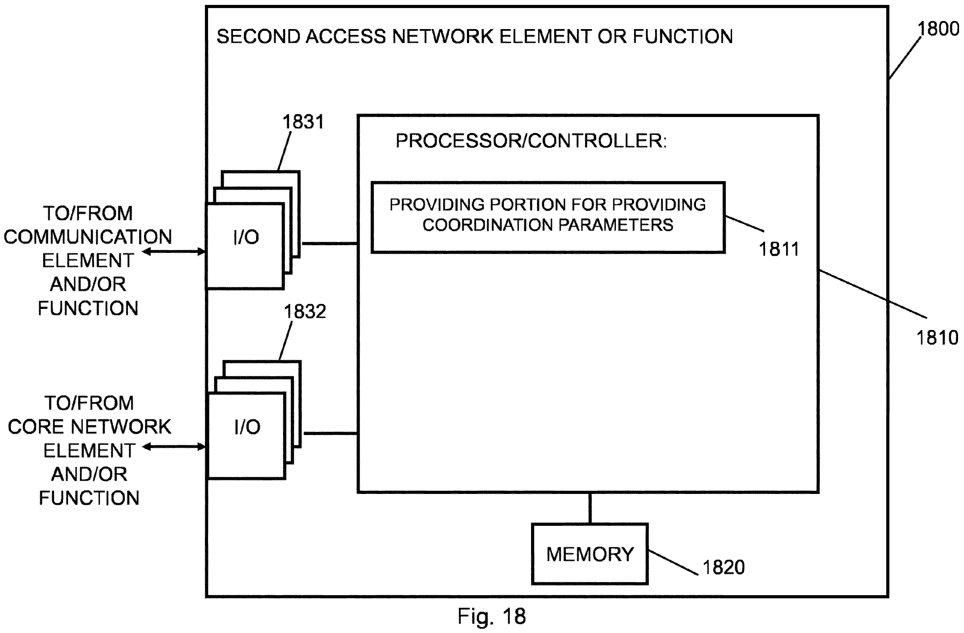

Referring now to Figure 18, Figure 18 shows a block diagram illustrating an apparatus according to various examples of embodiments.

Specifically, Figure 18 shows a block diagram illustrating an apparatus 1800, which may represent a second access network element or function, like e.g. such NG-RAN B and/or gNB-DU B as outlined above with reference to Figures 6 and 9, according to various examples of embodiments, which may participate in cell DTX and cell DRX negotiation. Furthermore, even though reference is made to a second access network element or function, the second access network element or function may be also another device or function having a similar task, such as a chipset, a chip, a module, an application etc., which can also be part of a network element or attached as a separate element to a network element, or the like. It should be understood that each block and any combination thereof may be implemented by various means or their combinations, such as hardware, software, firmware, one or more processors and/or circuitry.

The apparatus 1800 shown in Figure 18 may include a processing circuitry, a processing function, a control unit or a processor 1810, such as a CPU or the like, which is suitable to enable cell DTX and cell DRX negotiation. The processor 1810 may include one or more processing portions or functions dedicated to specific processing as described below, or the processing may be run in a single processor or processing function. Portions for executing such specific processing may be also provided as discrete elements or within one or more further processors, processing functions or processing portions, such as in one physical processor like a CPU or in one or more physical or virtual entities, for example. Reference signs 1831 and 1832 denote input/output (I/O) units or functions (interfaces) connected to the processor or processing function 1810. The I/O units 1831 and 1832 may be a combined unit including communication equipment towards several entities/elements, or may include a distributed structure with a plurality of different interfaces for different entities/elements. Reference sign 1820 denotes a memory usable, for example, for storing data and programs to be executed by the processor or processing function 1810 and/or as a working storage of the processor or processing function 1810. It is to be noted that the memory 1820 may be implemented by using one or more memory portions of the same or different type of memory, but may also represent an external memory, e.g. an external database provided on a cloud server.

The processor or processing function 1810 is configured to execute processing related to the above described processing. In particular, the processor or processing circuitry or function 1810 includes one or more of the following sub-portions. Sub-portion 1811 is a providing portion, which is usable as a portion for providing radio cell information and coordination parameters. The portion 1811 may be configured to perform processing according to S1410 of Figure 14.

It shall be noted that the apparatuses 1500, 1600, 1700 and 1800 as outlined above with reference to Figures 15 to 18 may comprise further/additional sub-portions, which may allow the apparatuses 1500, 1600, 1700 and 1800 to perform such methods/method steps as outlined above with reference to Figures 3 to 10.

It should be appreciated that
- an access technology via which traffic is transferred to and from an entity in the communication network may be any suitable present or future technology, such as WLAN (Wireless Local Access Network), WiMAX (Worldwide Interoperability for Microwave Access), LTE, LTE-A, 5G, Bluetooth, Infrared, and the like may be used; additionally, embodiments may also apply wired technologies, e.g. IP based access technologies like cable networks or fixed lines.
- embodiments suitable to be implemented as software code or portions of it and being run using a processor or processing function are software code independent and can be specified using any known or future developed programming language, such as a high-level programming language, such as objective-C, C, C++, C#, Java, Python, Javascript, other scripting languages etc., or a low-level programming language, such as a machine language, or an assembler.
- implementation of embodiments is hardware independent and may be implemented using any known or future developed hardware technology or any hybrids of these, such as a microprocessor or CPU (Central Processing Unit), MOS (Metal Oxide Semiconductor), CMOS (Complementary MOS), BiMOS (Bipolar MOS), BiCMOS (Bipolar CMOS), ECL (Emitter Coupled Logic), and/or TTL (Transistor-Transistor Logic).
- embodiments may be implemented as individual devices, apparatuses, units, means or functions, or in a distributed fashion, for example, one or more processors or processing functions may be used or shared in the processing, or one or more processing sections or processing portions may be used and shared in the processing, wherein one physical processor or more than one physical processor may be used for implementing one or more processing portions dedicated to specific processing as described,
- an apparatus may be implemented by a semiconductor chip, a chipset, or a (hardware) module including such chip or chipset;
- embodiments may also be implemented as any combination of hardware and software, such as ASIC (Application Specific IC (Integrated Circuit)) components, FPGA (Field-programmable Gate Arrays) or CPLD (Complex Programmable Logic Device) components or DSP (Digital Signal Processor) components.
- embodiments may also be implemented as computer program products, including a computer usable medium having a computer readable program code embodied therein, the computer readable program code adapted to execute a process as described in embodiments, wherein the computer usable medium may be a non-transitory medium.

Although the present disclosure has been described herein before with reference to particular embodiments thereof, the present disclosure is not limited thereto and various modifications can be made thereto.

## Claims

1. An apparatus (1600), comprising
at least one processor; and
at least one memory storing instructions that, when executed by the at least one processor, cause the apparatus at least to:
receive,
at the apparatus serving at least one first cell and neighboured to an access network element or function serving at least one second cell adjacent to the at least one first cell,
information about at least one second cell discontinuous transmission, DTX, and/or discontinuous reception, DRX, pattern used by the access network element or function at least over the at least one second cell;
based on the received information, determine a conflict with at least one first cell DTX and/or DRX pattern used by the apparatus at least over the at least one first cell; and
provide coordination parameters comprising at least one of
a pattern density parameter indicating a density of active time in a cell DTX and/or DRX pattern,
a preference parameter indicating a preference with respect to a usage of at least one cell DTX and/or DRX pattern, or
a characteristics parameter indicating a power and/or antenna characteristics for at least one cell DTX and/or DRX pattern.

2. The apparatus according to claim 1, wherein the apparatus caused to determine the conflict is further caused to at least one of, related to the at least one first cell:
determine an increase in interference levels,
determine that an interference level exceeds a predetermined interference level threshold,
determine an increased number of transmission and/or reception errors,
determine transmission and/or reception errors to exceed a predetermined error threshold,
predict an increase in interference levels,
predict an interference level to exceed a predetermined interference level threshold,
predict an increased number of transmission and/or reception errors, or
predict transmission and/or reception errors to exceed a predetermined error threshold.

3. The apparatus according to claim 1 or 2, wherein the coordination parameters further comprise at least one of
a preferred pattern list indicating a list of at least one cell DTX and/or DRX pattern of which usage is preferred by the apparatus,
a set of cell DTX and/or DRX patterns identified by the apparatus among the at least one second cell DTX and/or DRX pattern, of which usage is preferred by the apparatus,
a preference to update a probability of using at least one cell DTX and/or DRX pattern among the at least one second cell DTX and/or DRX pattern,
a preference to decrease a probability of using at least one cell DTX and/or DRX pattern among the at least one second cell DTX and/or DRX pattern,
a preference to increase a probability of using at least one cell DTX and/or DRX pattern among the at least one second cell DTX and/or DRX pattern,
a preference to use a cell DTX and/or DRX pattern containing a portion of non-active time equal to or above a predetermined non-active time threshold,
a preference to use a cell DTX and/or DRX pattern containing a portion of non-active time below a predetermined non-active time threshold, or
a preference to provide a predetermined DTX and/or DRX offset to a cell DTX and/or DRX cycle of at least one cell DTX and/or DRX pattern among the at least one second cell DTX and/or DRX pattern.

4. The apparatus according to any one of claims 1 to 3, wherein the apparatus is further caused to
indicate the preference over all the at least one second cell DTX and/or DRX pattern, or
indicate the preference for cell DTX and/or DRX patterns among the at least one second cell DTX and/or DRX pattern that the access network element or function is expected to use with a probability equal to or higher than a predetermined probability threshold.

5. The apparatus according to any one of claims 1 to 4, wherein the apparatus is further caused to
provide information in relation to at least one of
cells served by the apparatus, the cells including the at least one first cell,
first cell DTX and/or DRX patterns used by the apparatus over the cells served by the apparatus, the first cell DTX and/or DRX patterns including the at least one first cell DTX and/or DRX pattern,
the at least one first cell, or
the at least one first cell DTX and/or DRX pattern.

6. An apparatus (1700), comprising
at least one processor; and
at least one memory storing instructions that, when executed by the at least one processor, cause the apparatus at least to:
provide,
at the apparatus serving at least one second cell and neighboured to an access network element or function serving at least one first cell adjacent to the at least one second cell,
information about at least one second cell discontinuous transmission, DTX, and/or discontinuous reception, DRX, pattern used by the access network element or function at least over the at least one second cell;
based on the provided information, receive coordination parameters comprising at least one of
a pattern density parameter indicating a density of active time in a cell DTX and/or DRX pattern,
a preference parameter indicating a preference with respect to a usage of at least one cell DTX and/or DRX pattern, or
a characteristics parameter indicating a power and/or antenna characteristics for at least one cell DTX and/or DRX pattern; and
based on the received coordination parameters, update the at least one second cell DTX and/or DRX pattern.

7. The apparatus according to claim 6, wherein the apparatus caused to update the at least one second cell DTX and/or DRX pattern is further caused to at least one of:
update the at least one second cell DTX and/or DRX pattern with a cell DTX and/or DRX pattern indicated by the patent density parameter,
update the at least one second cell DTX and/or DRX pattern with a cell DTX and/or DRX pattern from a preferred pattern list further provided in the coordination parameters,
update a probability of using a cell DTX and/or DRX pattern from the at least one second DTX and/or DRX pattern as further indicated in the coordination parameters,
reduce a probability of using at least one cell DTX and/or DRX pattern among the at least one second cell DTX and/or DRX pattern as further indicated in the coordination parameters,
increase a probability of using at least one cell DTX and/or DRX pattern among the at least one second cell DTX and/or DRX pattern as further indicated in the coordination parameters,
if the density indicated by the pattern density parameter allows to satisfy traffic requirements of the apparatus, accommodate the indicated density by selecting among cell DTX and/or DRX patterns meeting the indicated density,
if there is no cell DTX and/or DRX pattern available at the apparatus to meet the density indicated by the pattern density parameter, select among the cell DTX and/or DRX patterns available at the apparatus at least one cell DTX and/or DRX pattern whose density differs from the indicated density by less than a predetermined pattern density threshold,
provide and/or update a DTX and/or DRX offset to a cell DTX and/or DRX cycle of at least one cell DTX and/or DRX pattern among the at least one second cell DTX and/or DRX pattern, or
update power and/or antenna characteristics for at least one cell DTX and/or DRX pattern among the at least one second cell DTX and/or DRX pattern.

8. The apparatus according to claim 6 or 7, wherein the apparatus is further caused to
receive information about at least one of
cells served by the access network element or function, the cells including the at least one first cell,
first cell DTX and/or DRX patterns used by the access network element or function over the cells, the first cell DTX and/or DRX patterns including the at least one first DTX and/or DRX pattern,
the at least one first cell, or
the at least one first cell DTX and/or DRX pattern; and
update the at least one second cell DTX and/or DRX pattern further based on the received information.

9. The apparatus according to any one of claims 6 to 8, wherein the apparatus is further caused to
receive a plurality of coordination parameters from a plurality of different access network elements or functions in relation to a conflict determined for the at least one second cell based on the at least one second cell DTX and/or DRX pattern used by the apparatus at least over the at least one second cell;
compare preferences for cell DTX and/or DRX patterns indicated in the received plurality of coordination parameters; and
based on the compared preferences, identify at least one cell DTX and/or DRX pattern with a preference equal to or above a predetermined preference threshold in relation to each of the preferences indicated in the plurality of coordination parameters.

10. The apparatus according to any one of claims 6 to 9, wherein the apparatus is further caused to
receive a plurality of coordination parameters from a plurality of different access network elements or functions in relation to conflicts determined for at least a predetermined number of cells among the cells served by the apparatus;
deactivate cell DTX and/or DRX operation mode at the apparatus; and
return the apparatus to legacy behaviour.

11. An apparatus (1800), comprising
at least one processor; and
at least one memory storing instructions that, when executed by the at least one processor, cause the apparatus at least to:
receive,
at the apparatus serving at least one first cell and neighboured to an access network element or function serving at least one second cell adjacent to the at least one first cell,
coordination parameters comprising at least one of
a pattern density parameter indicating a density of active time in a cell DTX and/or DRX pattern,
a preference parameter indicating a preference with respect to a usage of at least one cell DTX and/or DRX pattern, or
a characteristics parameter indicating a power and/or antenna characteristics for at least one cell DTX and/or DRX pattern; and
based on the received coordination parameters, determine at least one first cell DTX and/or DRX pattern to be used at least over the at least one first cell.

12. The apparatus according to claim 11, wherein the apparatus caused to determine is further caused to at least one of
choose a cell DTX and/or DRX pattern indicated by the patent density parameter,
choose a cell DTX and/or DRX pattern from a preferred pattern list further indicated in the coordination parameters,
update a probability of using a cell DTX and/or DRX pattern from the at least one first DTX and/or DRX pattern as further indicated in the coordination parameters,
reduce a probability of using at least one cell DTX and/or DRX pattern among the at least one first cell DTX and/or DRX pattern as further indicated in the coordination parameters,
increase a probability of using at least one cell DTX and/or DRX pattern among the at least one first cell DTX and/or DRX pattern as further indicated in the coordination parameters,
if the density indicated by the pattern density parameter allows to satisfy traffic requirements of the apparatus, accommodate the indicated density by selecting a cell DTX and/or DRX pattern meeting the indicated density,
if there is no cell DTX and/or DRX pattern available at the apparatus to meet the density indicated by the pattern density parameter, choose among the cell DTX and/or DRX patterns available at the apparatus at least one cell DTX and/or DRX pattern whose density differs from the indicated density by less than a predetermined pattern density threshold,
provide and/or update a DTX and/or DRX offset to a cell DTX and/or DRX cycle of at least one cell DTX and/or DRX pattern among the at least one first cell DTX and/or DRX pattern, or
choose power and/or antenna characteristics for at least one cell DTX and/or DRX pattern among the at least one first cell DTX and/or DRX pattern as indicated by the characteristics parameter.

13. An apparatus (1900), comprising
at least one processor; and
at least one memory storing instructions that, when executed by the at least one processor, cause the apparatus at least to:
provide,
at the apparatus serving at least one second cell and neighboured to an access network element or function serving at least one first cell adjacent to the at least one second cell,
coordination parameters comprising at least one of
a pattern density parameter indicating a density of active time in a cell DTX and/or DRX pattern,
a preference parameter indicating a preference with respect to a usage of at least one cell DTX and/or DRX pattern, or
a characteristics parameter indicating a power and/or antenna characteristics for at least one cell DTX and/or DRX pattern; and

14. The apparatus according to claim 13, wherein the coordination parameters further comprises at least one of
a preferred pattern list indicating a list of at least one cell DTX and/or DRX pattern of which usage is preferred by the apparatus,
a set of cell DTX and/or DRX patterns identified by the apparatus among at least one first cell DTX and/or DRX pattern available at the access network element or function, of which usage is preferred by the apparatus,
a preference to update a probability of using at least one cell DTX and/or DRX pattern among the at least one first cell DTX and/or DRX pattern,
a preference to decrease a probability of using at least one cell DTX and/or DRX pattern among the at least one first cell DTX and/or DRX pattern,
a preference to increase a probability of using at least one cell DTX and/or DRX pattern among the at least one first cell DTX and/or DRX pattern,
a preference to use a cell DTX and/or DRX pattern containing a portion of non-active time equal to or above a predetermined non-active time threshold,
a preference to use a cell DTX and/or DRX pattern containing a portion of non-active time below a predetermined non-active time threshold, or
a preference to provide a predetermined DTX and/or DRX offset to a cell DTX and/or DRX cycle of at least one cell DTX and/or DRX pattern among the at least one first cell DTX and/or DRX pattern.

15. The apparatus according to any one of claims 1 to 14, wherein
if the apparatus is a first NG-RAN node and the access network element or function is a second NG-RAN node, the apparatus caused to provide and/or receive is further caused to at least one of
provide and/or receive via an Xn interface available between the apparatus and the second NG-RAN node, or
provide and/or receive between the apparatus and the second NG-RAN node via the core network;
if the apparatus is a first gNB-DU and the access network element or function is a second gNB-DU, wherein the apparatus and the second gNB-DU are associated with a same gNB-CU, the apparatus caused to provide and/or receive is further caused to
provide and/or receive between the apparatus and the second gNB-DU via the gNB-CU and F1 interface;
if the apparatus is a first gNB-DU associated with a first gNB-CU and the access network element or function is a second gNB-DU associated with a second gNB-CU, the apparatus caused to provide and/or receive is further caused to
provide and/or receive between the apparatus and the second gNB-DU via the first gNB-CU and the second gNB-CU and F1 interface.
